# EUROPEAN PATENT SPECIFICATION

(11) **EP 4 559 753 B1**
(45) Date of publication and mention of the grant of the patent: **28.10.2026**
(21) Application number: 23212005.5
(22) Date of filing: 24.11.2023
(51) Int. Cl.: B60Q 1/40

(54) **DYNAMICALLY-CONTROLLED AUTOMATIC TURN SIGNAL CANCELLATION IN A VEHICLE**
DYNAMISCH GESTEUERTE AUTOMATISCHE ABBIEGESIGNALUNTERDRÜCKUNG IN EINEM FAHRZEUG
ANNULATION AUTOMATIQUE DE SIGNAL DE CHANGEMENT DE DIRECTION À COMMANDE DYNAMIQUE DANS UN VÉHICULE

(43) Date of publication of application: 28.05.2025
(73) Proprietor: VOLVO TRUCK CORPORATION, 405 08 Göteborg (SE)
(72) Inventor: BARRELLON, Remi, 69360 SIMANDRES (FR); GONZALEZ MOSQUERA, Oriana, 69100 VILLEURBANNE (FR); DE BRITO, David, 38230 CHARVIEU-CHAVAGNEUX (FR)
(74) Representative: Kransell & Wennborg KB

(56) References cited:
- EP-A1- 2 815 921
- WO-A1-2020/173543
- JP-A- 2006 321 347
- JP-A- 2011 131 631
- JP-B2- 5 576 087

## Description

### TECHNICAL FIELD

The invention relates generally to turn signaling operation in vehicles. In particular aspects, the invention relates to a dynamically-controlled automatic turn signal cancellation in a vehicle. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

A vehicle is equipped with a turn signal indicator that can be activated by a driver to activate turn signaling on the vehicle to provide a visual indication of intention of the driver. The driver can manually cancel a turn signal activation, but the vehicle is also equipped with an automatic turn signal cancellation system configured to automatically cancel previously-activated turn signaling (e.g., activated through a turn signal stalk) in response to detecting a vehicle turn is completed. In response to activation of a turn signal, an automatic turn signal cancellation system can be configured to determine if the turn is completed, to in turn cancel the turn signal based on changes in steering wheel angle. However, it may be difficult for an automatic turn signal cancellation system to distinguish between a normal turn and a highway lane change for controlling the cancellation of a turn signal. For example, at higher vehicle speeds, the steering wheel angle may not change as significantly in a highway lane change as in a normal turn or highway exit. Thus, it may be difficult for an automatic turn signal cancellation system to recognize the difference between a normal turn, a highway lane change, or exit, based on steering wheel angle.

According to its abstract, WO 2020/173543 A1 relates to relates to a computer-implemented method for automatically deactivating the right or left turn signals of a vehicle at the end of a turn, the method comprising steps consisting in: determining, as long as the right or left turn signals are on, the steering wheel angle with respect to a neutral position in which the two steered wheels of the vehicle are straight, determining the average angle of the steered wheels in relation to their upright position from the steering wheel angle, when the left turn signals are on, automatically deactivating the left turn signals when the average wheels angle exceeds, in relative value, a first positive threshold and then, still in relative value, falls below a second positive threshold, failing this, keeping the left turn signals on, when the right turn signals are on, automatically deactivating the right turn signals when the average wheels angle falls below, in relative value, a first negative threshold and then, still in relative value, exceeds a second negative threshold, failing this, keeping the right turn signals on.

### SUMMARY

Exemplary aspects disclosed herein include a dynamically-controlled automatic turn signal cancellation in a vehicle. A vehicle is equipped with a turn signal indicator that can be activated by a driver to activate turn signaling on the vehicle to provide a visual indication of intention of the driver. The driver can manually cancel a turn signal activation, but the vehicle is also equipped with an automatic turn signal cancellation system configured to automatically cancel previously-activated turn signaling (e.g., activated through a turn signal stalk) in response to detecting a vehicle turn is completed. In response to activation of a turn signal, the automatic turn signal cancellation system is configured to determine if the steering wheel angle changes beyond a first threshold angle as an indication the vehicle has turned sufficiently in the direction of turn signal to signify a turn. The automatic turn signal cancellation system is then configured to determine when the steering wheel angle has fallen below a second threshold angle indicating that the turn has reached the maximum steering wheel angle and the steering wheel angle is now returning towards a turn neutral position. If thereafter, the steering wheel angle remains within a turn neutral angle window (e.g., +/- 1 radians from a steering wheel turn neutral position) for a determined stability time, meaning the steering wheel angle is now stable after the turn, the turn is deemed completed and the turn signal is automatically cancelled.

In exemplary aspects, the stability time is dynamically determined inversely related to the maximum steering wheel angle of the turn. In other words, the larger the steering wheel motion of the turn, the smaller the stability time used to determine steering wheel stability and turn completion will be. This is because a steering wheel will generally return to a stable position after turn completion in a shorter period of time (e.g., <= 1.6 seconds) when recovering from a larger steering wheel motion from a sharper turn (i.e., the steering wheel angle recovery has a larger slope) than from a smaller steering wheel motion from a lighter turn (e.g., <= 3 seconds) (i.e., the steering wheel angle recovery has a smaller slope). Vehicles are designed to require more steering wheel force for sharp turns for stability and safety, which then causes the steering wheel to recover to a turn neutral position more quickly for sharp turns as opposed to light turns.

In other exemplary aspects, the automatic turn signal cancellation system can also be configured to dynamically set the first threshold angle that was used to indicate the vehicle had turned sufficiently in the direction of turn signal, based on the speed of the vehicle. This is because the steering wheel angle change needed to perform a given turn is inversely related to vehicle speed, due to increased centripetal force and inertia of a vehicle turn at higher speeds. In other words, the faster the vehicle speed, the less steering wheel angle change is required to perform the desired turn. Thus, in this example, in response to a turn signal being activated, the speed of the vehicle can also be determined. The vehicle speed can then be used to dynamically calculate and set the first threshold angle used to indicate the vehicle has turned sufficiently in the direction of the turn signal. The higher the vehicle speed, the less change in steering wheel angle is required to accomplish a desired turn. Thus, the automatic turn signal cancellation system, determining the vehicle has a higher speed in response to a turn signal activation, will cause the automatic turn signal cancellation system to use a smaller angle as the first threshold angle used to indicate the vehicle has turned sufficiently in the direction of the turn signal than if the vehicle had a slower speed. In this manner, the stability time to determine if the turn signal should be cancelled will inherently be dynamically based on the maximum steering wheel angle of the turn that affects the slope of the steering wheel angle falling back below the second threshold angle. Thus, a larger steering wheel angle slope means a sharper turn at less speed and thus less stability time provided, and a smaller steering wheel angle slope means a lighter turn at higher speed, and more stability time provided.

In yet other exemplary aspects, the ability of the automatic turn signal cancellation system can also be configured to distinguish between a simple turn (e.g., a simple turn and/or roundabout), as compared to highway turning for automatic turn signal cancellation. Highway turning is turning that does not necessarily involve sharp steering wheel angle changes, such as when a vehicle performs highway merging to enter a highway, highway lane changes, and highway exiting. This is because less steering wheel angle change is required to perform a turn at higher speeds than are generally present in highway driving. This is because the steering wheel angle change needed to perform a given turn is inversely related to vehicle speed due to increased centripetal force and inertia of a vehicle turn at higher speeds. Thus, in highway turning, the detection of the steering wheel angle used for detection of simple turns and/or roundabouts may not be significant enough to detect highway turning for automatic turn signal cancellation after the highway turn is completed. Thus, in exemplary aspects, to be able to cancel a turn signal after completion of a highway turn that is not detectable through steering wheel angle change based on exceeding the first threshold angle (e.g., a dynamically set first threshold angle based on vehicle speed), the automatic turn signal cancellation system can be configured to cancel the turn signal based on detecting the highway turn using a secondary turn detection system, such as a forward-looking camera (FLC) that can be used to detect a highway turn. Other secondary turn detection systems of detecting a highway turn may be employed, such as through use of radar, lidar, beacons, global positioning, etc.

According to a first aspect of the invention, an automatic turn signal cancellation system comprising processing circuitry configured to, in response to activation of a turn signal in a vehicle is provided. The processing circuitry is configured detect a steering wheel angle related to turning of a steering wheel of the vehicle exceeding a first threshold angle from a turn neutral position indicating a turn. In response to detecting the steering wheel exceeding the first threshold angle, the processing circuitry is further configured to detect that the steering wheel angle has fallen below a second threshold angle less than the first threshold angle and towards the turn neutral position, and determine a maximum steering wheel angle related to turning of the steering wheel after the steering wheel angle exceeded the first threshold angle. In response to detecting that the steering wheel angle has fallen below the second threshold angle, the processing circuitry is further configured to set a stability time based on the determined maximum steering wheel angle, and determine whether the steering wheel angle remains in a turn neutral angle window for the set stability time. In response to determining the steering wheel angle remains in the turn neutral angle window for the set stability time, the processing circuitry is further configured to cancel the turn signal.

Optionally in some examples, including in at least one preferred example, the processing circuitry is further configured to, in response to determining the steering wheel angle does not remain in the turn neutral angle window for the set stability time, not cancel the turn signal.

Optionally in some examples, including in at least one preferred example, the processing circuitry is configured to set the stability time inversely to the determined maximum steering wheel angle.

Optionally in some examples, including in at least one preferred example, the processing circuitry is configured to set the stability time to less than or equal to three (3) seconds and greater than two (2) seconds based on the determined maximum steering wheel angle.

Optionally in some examples, including in at least one preferred example, the processing circuitry is configured to set the stability time to the less than or equal to three (3) seconds and greater than two (2) seconds based on the determined maximum steering wheel angle being less than +/-0.17 radians.

Optionally in some examples, including in at least one preferred example, the processing circuitry is configured to set the stability time to less than or equal to two (2) seconds and greater than 1.6 seconds based on the determined maximum steering wheel angle.

Optionally in some examples, including in at least one preferred example, the processing circuitry is configured to set the determined stability time to the less than or equal to two (2) seconds and greater than 1.6 seconds based on the determined maximum steering wheel angle being greater than or equal to +/-0.17 radians and less than +/-0.19 radians.

Optionally in some examples, including in at least one preferred example, the processing circuitry is configured to set the stability time to less than or equal to 1.6 seconds, based on the determined maximum steering wheel angle.

Optionally in some examples, including in at least one preferred example, the processing circuitry is configured to set the determined stability time to the less than or equal to 1.6 seconds based on the determined maximum steering wheel angle being greater than or equal to +/- 0.19 radians.

Optionally in some examples, including in at least one preferred example, the processing circuitry is further configured to, in response to activation of the turn signal in the vehicle: determine a speed of the vehicle, and set the first threshold angle relative to the turn neutral position based on the speed of the vehicle.

Optionally in some examples, including in at least one preferred example, the processing circuitry is configured to set the first threshold angle relative to the turn neutral position of the steering wheel inversely to the speed of the vehicle.

Optionally in some examples, including in at least one preferred example, the processing circuitry is configured to detect the steering wheel angle exceeding the first threshold angle in the direction of the turn signal, and in response to detecting the steering wheel angle exceeding the first threshold angle in the direction of the turn signal: detect that the steering wheel angle has fallen below the second threshold angle less than the first threshold angle towards the turn neutral position, and in response to detecting that the steering wheel angle has fallen below the second threshold angle: determine the maximum steering wheel angle after the steering wheel angle exceeded the first threshold angle; set the stability time based on the determined maximum steering wheel angle; determine whether the steering wheel angle remains in the turn neutral angle window for the set stability time; and in response to determining the steering wheel angle remains in the turn neutral angle window for the set stability time, cancel the turn signal.

Optionally in some examples, including in at least one preferred example, the processing circuitry is configured to, in response to the first threshold angle being set to less than or equal to +/-0.0553 radians, set the determined stability time to less than or equal to 1.5 seconds.

Optionally in some examples, including in at least one preferred example, the turn neutral angle window is between -1 radian and 1 radian.

Optionally in some examples, including in at least one preferred example, in response to activation of the turn signal, the processing circuity is further configured to: detect a highway turn by the vehicle while the steering wheel angle is within the turn neutral position, and in response to detecting the highway turn, cancel the turn signal.

Optionally in some examples, including in at least one preferred example, the processing circuity is configured to detect the highway turn by being configured to: receive at least one image from an imaging system, and determine whether the highway turn occurred based on the received at least one image.

Optionally in some examples, including in at least one preferred example, the imaging system comprises a forward-looking camera configured to capture images of a forward-looking perspective from the vehicle.

Optionally in some examples, including in at least one preferred example, the processing circuity is configured to detect the highway turn by being configured to: receive turn data of the vehicle generated by a global-positioning system (GPS), and determine whether the highway turn occurred based on the received turn data.

Optionally in some examples, including in at least one preferred example, a vehicle comprising the automatic turn signal cancellation system described above is provided.

Optionally in some examples, including in at least one preferred example, the vehicle further comprises a steering wheel angle sensor configured to generate a steering wheel angle signal indicative of the steering wheel angle.

Optionally in some examples, including in at least one preferred example, a method of automatically canceling a turn signal in a vehicle is provided. The method comprises detecting, by a processing circuitry, activation of a turn signal in the vehicle. In response to detecting activation of the turn signal, the method further comprises detecting, by the processing circuitry, a steering wheel angle related to turning of a steering wheel of the vehicle exceeding a first threshold angle from a turn neutral position indicating a turn. In response to the processing circuity detecting the steering wheel angle exceeding the first threshold angle, the method further comprises detecting, by the processing circuitry, that the steering wheel angle has fallen below a second threshold angle less than the first threshold angle and towards the turn neutral position, and determining, by the processing circuitry, a maximum steering wheel angle related to turning of the steering wheel after the steering wheel angle exceeded the first threshold angle. In response to the processing circuity detecting that the steering wheel angle has fallen below the second threshold angle, the method further comprises setting, by the processing circuitry, a stability time based on the determined maximum steering wheel angle, determining, by the processing circuitry, whether the steering wheel angle remains in a turn neutral angle window for the set stability time, and canceling, by the processing circuitry, the turn signal in response to determining the steering wheel angle remains in the turn neutral angle window for the set stability time.

Optionally in some examples, including in at least one preferred example, the method further comprises, in response to activation of the turn signal in the vehicle: determining a speed of the vehicle, and setting the first threshold angle relative to the turn neutral position based on the speed of the vehicle.

Optionally in some examples, including in at least one preferred example, a computer program product comprising program code for performing, when executed by the processing circuitry, the method(s) described above, is provided.

Optionally in some examples, including in at least one preferred example, a non-transitory computer-readable storage medium comprising instructions, which, when executed by the processing circuitry, cause the processing circuitry to perform the method(s) described above, is provided.

There are also disclosed herein computer systems, control units, code modules, computer-implemented methods, computer readable media, and computer program products associated with the above discussed technical benefits.

### BRIEF DESCRIPTION OF THE DRAWINGS

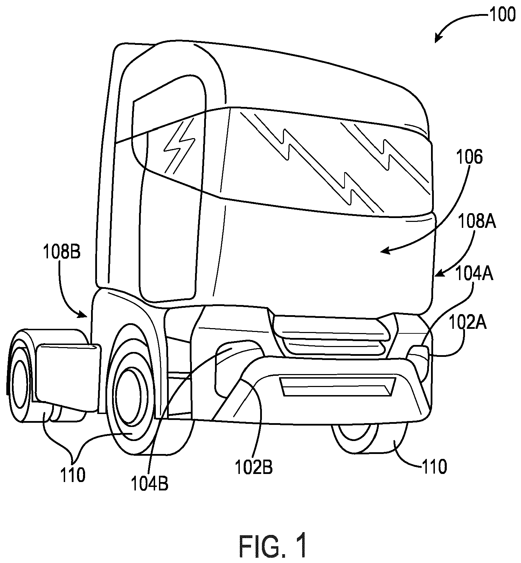

**FIG. 1** is a side perspective view of an exemplary vehicle in the form of a truck that has turn signals configured to be manually activated by a turn signal activator (e.g., a turn signal stalk), and wherein the vehicle also has an automatic turn signal cancellation system configured to automatically cancel a turn signal based on detecting a completed turn;

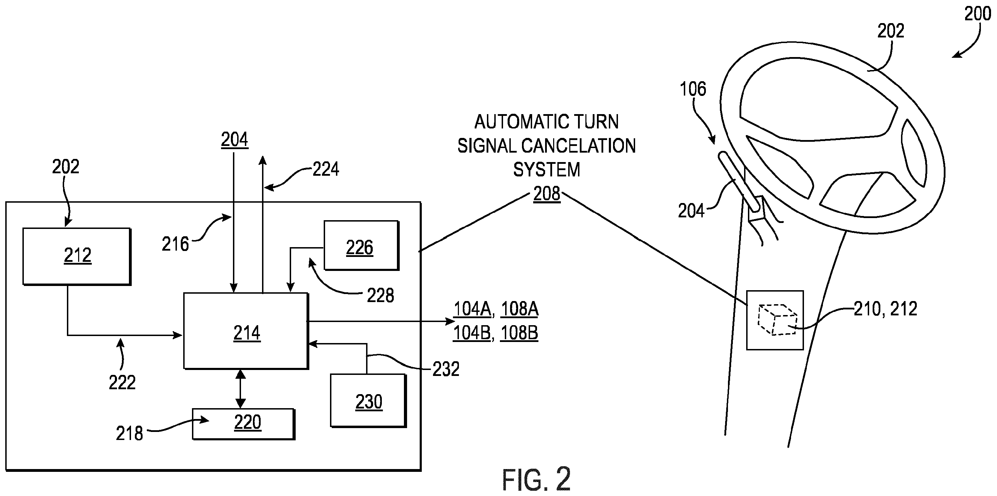

**FIG. 2** is a side perspective view of an exemplary steering system that can be in the vehicle in **FIG. 1****,** wherein the steering system includes a steering wheel and a turn signal stalk for activation of a turn signal, and a dynamically-controlled automatic turn signal cancellation system that is coupled to the steering wheel and includes a rotation sensor in the exemplary form of a steering wheel angle sensor configured to detect the turn angle of the steering wheel relative to a turn neutral position used to detect a vehicle turn and completion of a turn and for cancellation of a turn signal;

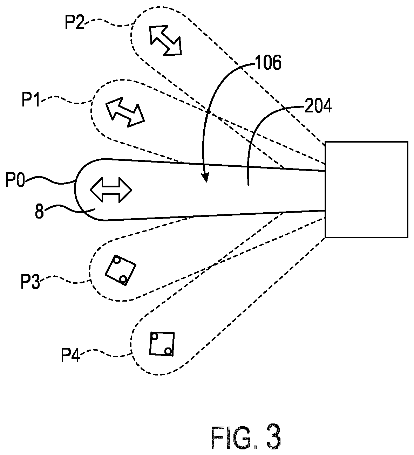

**FIG. 3** is a side view of exemplary switch positions of the turn signal stalk in **FIG.** 2;

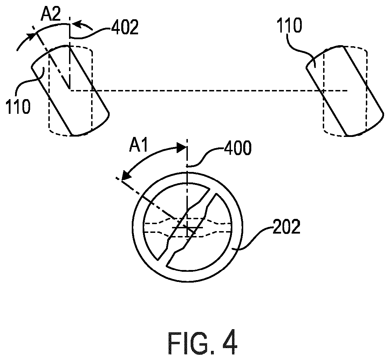

**FIG. 4** is a diagram illustrating an exemplary vehicle turn angle as a function of change in the steering wheel angle by the turning of the steering wheel in **FIG. 2****;**

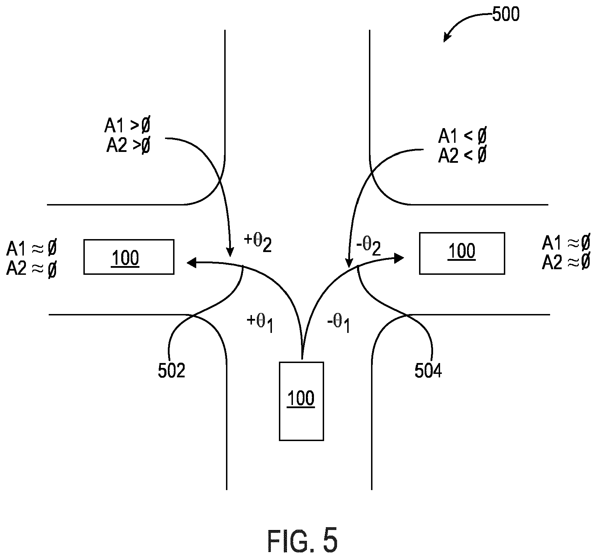

**FIG. 5** is an exemplary road intersection to illustrate turning;

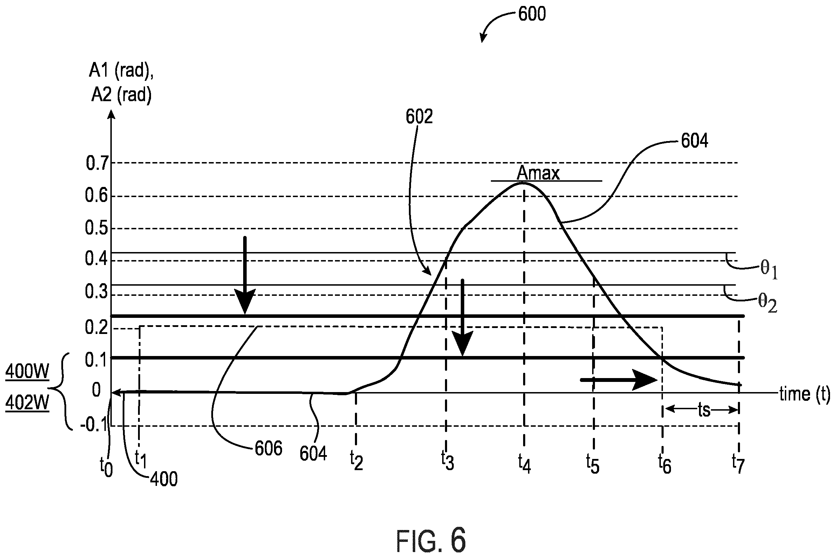

**FIG. 6** is a graph illustrating an exemplary steering wheel angle detected by a steering wheel angle sensor in the dynamically-controlled automatic turn signal cancellation system in **FIG. 2****,** wherein the steering wheel angle is used by the processing circuitry to detect a turn and cancel a turn signal based on the steering wheel angle returning and remaining in a turn neutral angle window for a stability time dynamically set according to the determined maximum steering wheel angle of the turn;

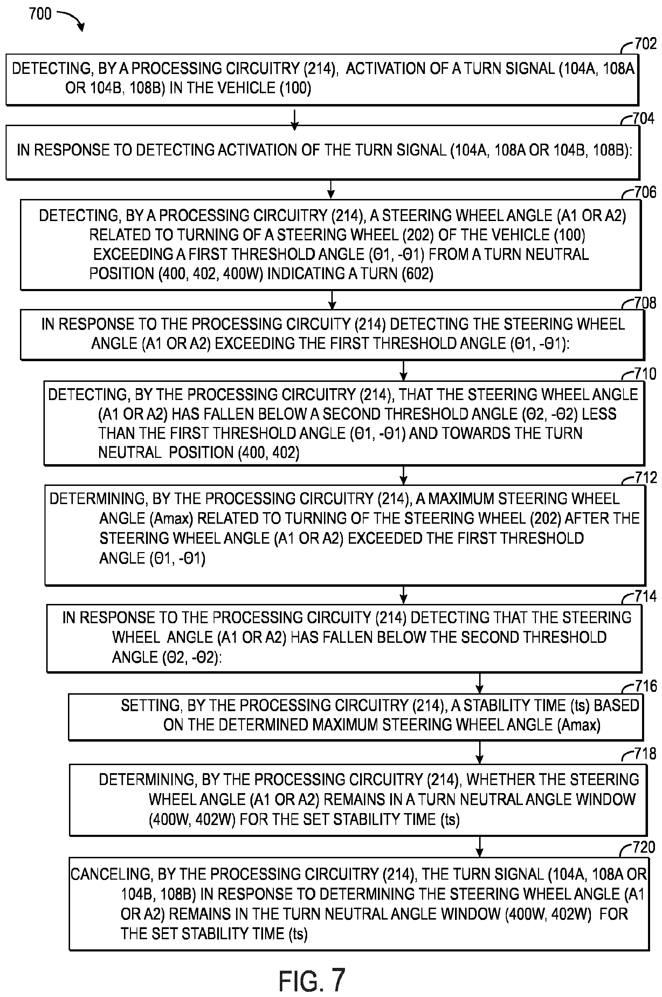

**FIG. 7** is a flowchart illustrating an exemplary process of the processing circuitry in the dynamically-controlled automatic turn signal cancellation system in **FIG. 2** for automatically canceling a turn signal based on detecting a turn that has been completed as a function of the steering wheel angle remaining within a turn neutral angle window for a determined stability time, wherein the stability time is dynamically set according to the determined maximum steering wheel angle of the turn;

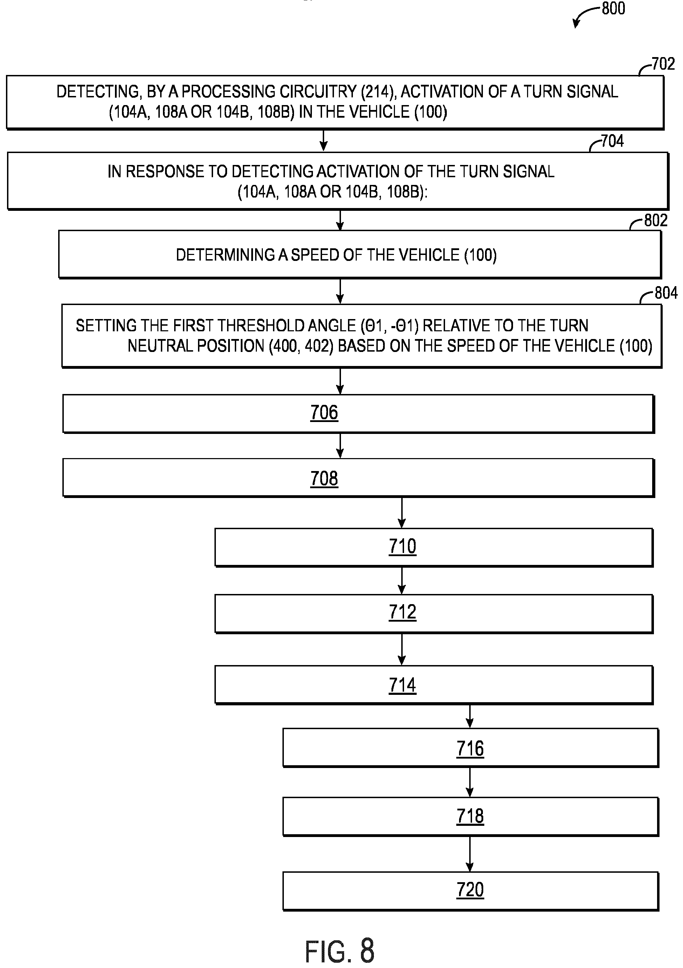

**FIG. 8** is a flowchart illustrating another exemplary process of the processing circuitry in the dynamically-controlled automatic turn signal cancellation system in **FIG. 2** that includes the process in **FIG. 7** to detect a turn and automatically cancel the turn signal, but also includes dynamically setting the first threshold angle of the steering wheel angle used to detect the turn as a function of vehicle speed;

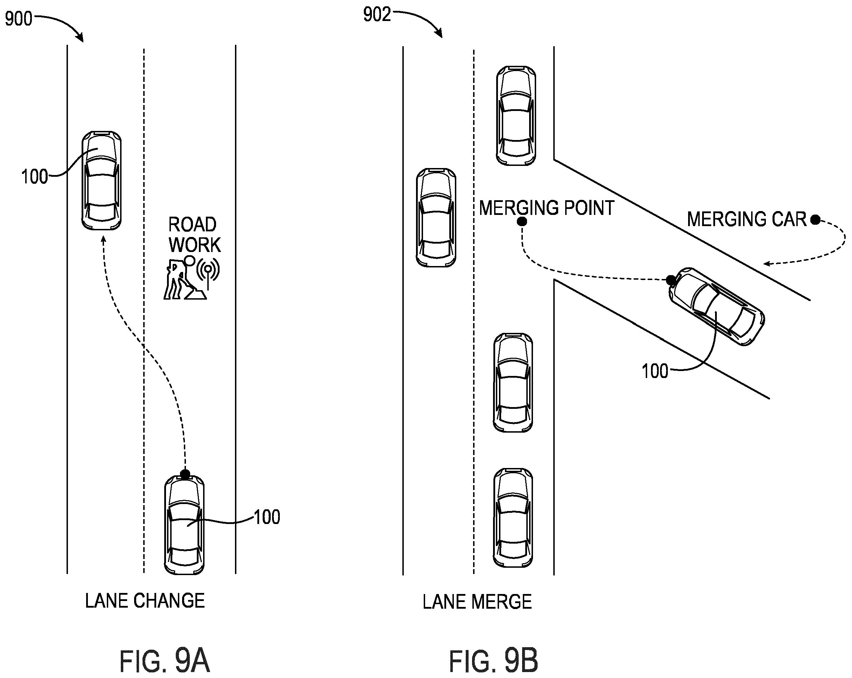

**FIG. 9A** and **9B** are diagrams of exemplary vehicle highway turns in the form of a lane change and a merge onto a highway, respectively, wherein the steering wheel angle may not significantly change during the highway turn;

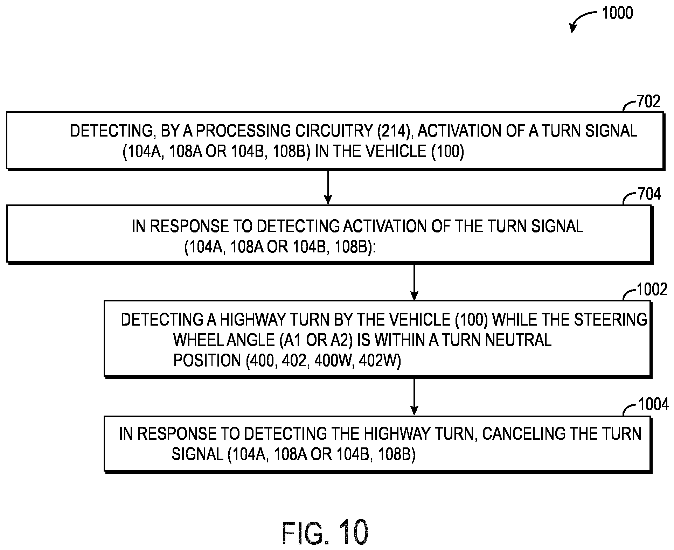

**FIG. 10** is a flowchart illustrating an exemplary process of the dynamically-controlled automatic turn signal cancellation system in **FIG. 2** also being configured to cancel a turn signal in response to detecting a highway turn when the steering wheel angle is not detected to change significantly enough to signify a vehicle turn; and

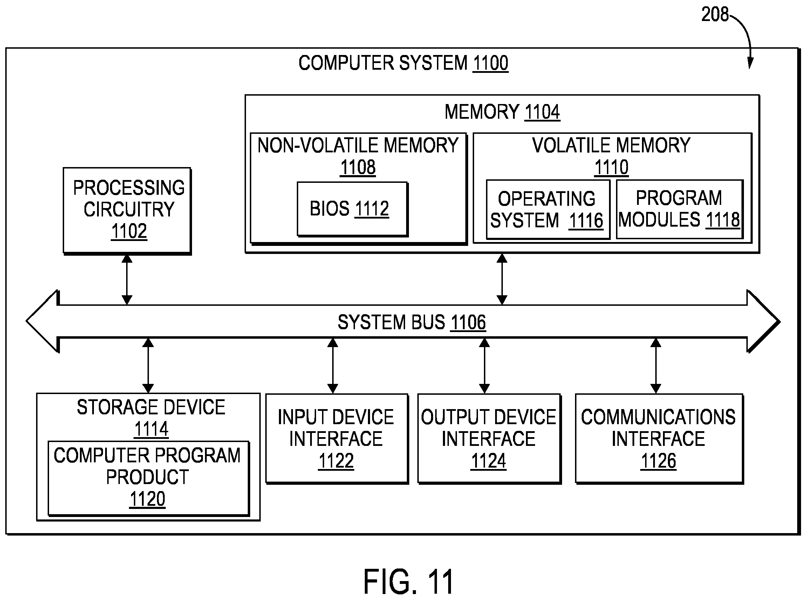

**FIG. 11** is a block diagram of an exemplary computer system that can be included in a dynamically-controlled automatic turn signal cancellation system, including but not limited to the dynamically-controlled automatic turn signal cancellation system in **FIG. 2****,** configured to automatically cancel a turn signal based on detecting a completed turn as a function of the steering wheel angle remaining within a turn neutral angle window for a determined stability time, wherein the stability time is dynamically set according to the determined maximum steering wheel angle of the turn.

### DETAILED DESCRIPTION

The detailed description set forth below provides information and examples of the disclosed technology with sufficient detail to enable those skilled in the art to practice the invention.

Exemplary aspects disclosed herein include a dynamically-controlled automatic turn signal cancellation in a vehicle. A vehicle is equipped with a turn signal indicator that can be activated by a driver to activate turn signaling on the vehicle to provide a visual indication of intention of the driver. The driver can manually cancel a turn signal activation, but the vehicle is also equipped with an automatic turn signal cancellation system configured to automatically cancel previously-activated turn signaling (e.g., activated through a turn signal stalk) in response to detecting a vehicle turn is completed. In response to activation of a turn signal, the automatic turn signal cancellation system is configured to determine if the steering wheel angle changes beyond a first threshold angle as an indication the vehicle has turned sufficiently in the direction of turn signal to signify a turn. The automatic turn signal cancellation system is then configured to determine when the steering wheel angle has fallen below a second threshold angle indicating that the turn has reached the maximum steering wheel angle and the steering wheel angle is now returning towards a turn neutral position. If thereafter, the steering wheel angle remains within a turn neutral angle window (e.g., +/- 1 radians from a steering wheel turn neutral position) for a determined stability time meaning the steering wheel angle is now stable after the turn, the turn is deemed completed and the turn signal is automatically cancelled.

In exemplary aspects, the stability time is dynamically determined inversely related to the maximum steering wheel angle of the turn. In other words, the larger the steering wheel motion of the turn, the smaller the stability time used to determine steering wheel stability and turn completion will be. This is because a steering wheel will generally return to a stable position after turn completion in a shorter period of time (e.g., <= 1.6 seconds) when recovering from a larger steering wheel motion from a sharper turn (i.e., the steering wheel angle recovery has a larger slope) than from a smaller steering wheel motion from a lighter turn (e.g., <= 3 seconds) (i.e., the steering wheel angle recovery has a smaller slope). Vehicles are designed to require more steering wheel force for sharp turns for stability and safety, which then causes the steering wheel to recover to a turn neutral position more quickly for sharp turns as opposed to light turns.

In other exemplary aspects, the automatic turn signal cancellation system can also be configured to dynamically set the first threshold angle that was used to indicate the vehicle had turned sufficiently in the direction of turn signal, based on the speed of the vehicle. This is because the steering wheel angle change needed to perform a given turn is inversely related to vehicle speed, due to increased centripetal force and inertia of a vehicle turn at higher speeds. In other words, the faster the vehicle speed, the less steering wheel angle change is required to perform the desired turn. Thus, in this example, in response to a turn signal being activated, the speed of the vehicle can also be determined. The vehicle speed can then be used to dynamically calculate and set the first threshold angle used to indicate the vehicle has turned sufficiently in the direction of the turn signal. The higher the vehicle speed, the less change in steering wheel angle is required to accomplish a desired turn. Thus, the automatic turn signal cancellation system determining the vehicle has a higher speed in response to a turn signal activation will cause the automatic turn signal cancellation system to use a smaller angle as the first threshold angle used to indicate the vehicle has turned sufficiently in the direction of the turn signal than if the vehicle had a slower speed. In this manner, the stability time to determine if the turn signal should be cancelled will inherently be dynamically based on the maximum steering wheel angle of the turn that affects the slope of the steering wheel angle falling back below the second threshold angle. Thus, a larger steering wheel angle slope means a sharper turn at less speed and thus less stability time provided, and a smaller steering wheel angle slope means a lighter turn at higher speed, and more stability time provided.

In this regard, **FIG. 1** is a side perspective view of an exemplary vehicle **100** in the form of a truck that has front head lights **102A, 102B** that include respective front left and front right turn signals **104A, 104B** configured to be manually activated by a turn signal activator **106** (e.g., a turn signal stalk) to flash to indicate an intention of the driver to turn the vehicle **100.** The vehicle **100** also has rear left and right turn signals **108A, 108B** located in the rear of the vehicle **100** that are also configured to flash when the turn signal activator **106** is activated. When the turn signal activator **106** is activated for a left turn, the front and rear left turn signals **104A, 108A** are activated to flash. When the turn signal activator **106** is activated for a right turn, the front and rear right turn signals **104B, 108B** are activated to flash. The vehicle **100** may have other turn signals as well. The vehicle 100 also includes wheels **110** with tires that support the vehicle **100** on the road and are linked to axles that are controlled by a steering wheel (see **FIG. 2****)** inside the vehicle **100** for the driver to turn the vehicle in the desired direction.

**FIG. 2** is a side perspective view of an exemplary steering system **200** that can be in the vehicle **100 in** **FIG. 1** that includes a steering wheel **202** that can be controlled by a driver to steer and turn the vehicle **100.** The steering system **200** also includes the turn signal activator **106** in the form of a turn signal stalk **204** in this example for activation of the turn signals **104A, 108A** and **104B, 108B.** However, other forms of a turn signal activator **106,** such as a turn signal button integrated into the steering wheel **202,** could also be provided. In this example, as shown in **FIG. 3****,** to activate the left turn signals **104A, 108A,** the turn signal stalk **204** is rotated downward from a **P0** turn neutral position, which is also a turn signal deactivation position, to position **P4.** Position **P0** of the turn signal stalk **204** is referred to as "stable" or turn neutral position because it is a position in which the turn signal stalk **204** is located by default, in the absence of any action by the driver. On the other hand, all other positions **P1** to **P4** are referred to as "unstable" positions since the turn signal stalk **204** cannot remain locked (alone) in any of these positions. The driver of the vehicle **100** moves the turn signal stalk **204** up when he wishes to turn right and moves the turn signal stalk **204** down when he wishes to turn left. To activate the right turn signals **104B, 108B,** the turn signal stalk **204** is rotated upward to the **P2** position. In this example, to momentarily activate either the left turn signals **104A, 108A,** or right turn signals **104B, 108B,** the turn signal stalk **204** can be moved to the positions **P3** and **P1,** respectively, which are also referred to as "highway positions" to signify lane changes or merging entrances and exits, for example. In positions **P3** and **P1,** the turn signal stalk **204** is configured to automatically return to position **P0** when force is removed from the turn signal stalk **204.** The steering system **200** in the vehicle **100** may be configured to cause the left turn signals **104A, 108A** and right turn signals **104B, 108B** to flash for only a predetermined or programmed limited number of times or duration of time with the turn signal stalk **204** is moved to the respective positions **P3** and **P1.** This is particularly suitable for driving on highways, where changes of direction are generally very short. In this instance, turn signal cancellation is not required. Advantageously, if the driver keeps the turn signal stalk **204** in its first position **P1** or **P3,** i.e., if he does not let the turn signal stalk **204** return to its neutral position **P0,** then the right turn signals **104B, 108B** or left turn signals **104A, 108A** remain activated until the turn signal stalk **204** returns to its neutral position **P0.**

The angle of movement required to move the turn signal stalk **204** between the neutral position **P0** and the second position **P2** or **P4** is greater than that required to move the turn signal stalk **204** between the neutral position **P0** and the first position **P1** or **P3.** When the turn signal stalk **204** is set to either position **P2** or **P4** in this example, the turn signal stalk **204** could be designed to release back to neutral position **P0** with the respective right turn signals **108BA, 108B** or left turn signals **104A, 108A** remaining active until either cancelled manually by the driver or through an automatic turn signal cancellation system like described below. Alternatively, when the turn signal stalk **204** is set to either position **P2** or **P4,** the turn signal stalk **204** could be designed to remain in these positions and the respective right turn signals **108BA, 108B** or left turn signals **104A, 108A** remain active until the turn signal stalk **204** is moved out of these positions **P2** or **P4** back to the neutral position **P0** either manually or through an automatic turn signal cancellation system like described below. This type of actuation mode is discussed in U.S. Patent No. 9,041,526 B2. Thus, right turn signals **104B, 108B** or left turn signals **104A, 108A** could remain active and continue to flash until either manually canceled or automatically canceled by an automatic turn signal cancellation system. For example, a driver may move the turn signal stalk **204** from position **P2** or **P4** to neutral position **P0,** or the driver may move the turn signal stalk **204** from position **P2** or **P4** all the way to respective positions **P4** or **P2** to signify a right turn then going directly to a left turn. Finally, the turn signals **104A, 108A or 104B, 108B** automatically turn off when the driver of the vehicle **100** switches off its ignition, i.e., turns off the engine.

As mentioned above, and as shown in **FIG. 2****,** the steering system **200** of the vehicle **100** in this example also includes a dynamically-controlled automatic turn signal cancellation system **208** to automatically deactivate the vehicle's **100** turn signals **104A, 108A or 104B, 108B** at the end of a turn. The dynamically-controlled automatic turn signal cancellation system **208** could be part of the vehicle's **100** Electronic Control Unit (ECU). In this example, as shown in **FIG. 2****,** the dynamically-controlled automatic turn signal cancellation system **208** includes a steering wheel sensor **210** in the form of a steering wheel angle sensor **212** (also referred to as a steering angle sensor (SAS)) configured to measure the rotation of the steering wheel **202,** and in particular the angle of the steering wheel **202** with respect to a turn neutral position in which the vehicle wheels **110** are generally straight. The steering wheel angle sensor **212** can measure the degree of rotation of the steering wheel **202** in relation to a turn neutral position. Of course, any other sensor or method can be used to determine the degree of rotation of the steering wheel in radiant/degrees. Typically, steering wheel angle information can be accessed from the power steering system data of the vehicle **100.** The angle of the steering wheel **202** is a relative angle which can therefore be positive or negative depending on the direction of rotation from a turn neutral position. Typically, when talking about the steering wheel **202** angle in relation to a turn neutral position (wheels straight), the steering wheel **202** angle will be positive when turning the steering wheel **202** to the left and negative when turning the steering wheel **202** to the right (polar coordinates). The same applies to the average angle of the vehicle's front wheels **110.** When turning left, the angle of rotation of the wheels **110** is considered positive, while when turning right, it will be negative. This dynamically-controlled automatic turn signal cancellation system **208** is configured to control the activation and deactivation of the turn signals **104A, 108A or 104B, 108B** according to the driver's maneuvers on the turn signal stalk **204** and the vehicle's driving conditions, as described in more detail below.

**FIG. 4** is a diagram illustrating an exemplary vehicle turn angle that can be sensed by the steering wheel angle sensor **212** as a function of change in the steering wheel **202** angle by the turning of the steering wheel **202 in** **FIG. 2****.** For example, as shown in **FIG. 4****,** when the steering wheel **202** is turned left from a turn neutral position **400** of the steering wheel **202** to the left at steering wheel angle **A1,** the vehicle **100** is configured to turn the front wheels **110** from a turn neutral position to a wheel steering angle **A2,** which can also be referred to a steering wheel angle **A2.** In other words, the turning of the steering wheel **202** causes the front wheels **110** to move in the same direction, but such movement may not be linear. The steering wheel angle sensor **212 in** **FIG. 2** is configured to detect the steering wheel angle **A1** movement of the steering wheel **202** from the turn neutral position **400** of the steering wheel **202.** The steering wheel angle **A2** is known as average wheel angle, because there may be a slight difference between the right and left wheel **110** angles. The steering wheel angle **A2** of the vehicle's steered wheels' radians with respect to their upright position may be extrapolated based on the steering wheel angle **A1** from a model previously established from several wheels angle calculations for several specific steering wheel angles. In particular, the relationship has been advantageously linearized through five (5) wheel steering angle values for which the ratio between steering wheel angle **A1** and average steering wheel angle **A2** is known. The parameters that influence the steering of the vehicle **100** and the angle of turning of the wheels **110** as a function of the turning of the steering wheel **202** are essentially as follows: vehicle type (length, weight, etc.), engine (dimensions), chassis, wheelbase, connection bar, front suspension, number of axles, and directional geometry, etc.

Five known exemplary steering ratios are as follows:
- Steering ratio when the average wheel angle is 0.6 radians on the right;
- Steering ratio when the average wheel angle is 0.2 radians on the right;
- Steering ratio when the average wheel angle is 0 radians;
- Steering ratio when the average wheel angle is 0.2 radians left;
- Steering ratio when the average wheel angle is 0.6 radians to the left.

From these values, it is possible to estimate, for a given steering wheel angle **A1** value, the average angle of the corresponding wheels with some precision as described in International Patent Application Publication WO 2020/173543.

Note that as examples, the dynamically-controlled automatic turn signal cancellation system **208** can be configured to use the steering wheel angle **A1** or a translation of the steering wheel angle **A1** to the wheel angle **A2** to perform tasks relating to detection and completion of a turn discussed herein. The term "steering wheel angle" is used to encompass either steering wheel angle **A1** or wheel angle **A2.**

The dynamically-controlled automatic turn signal cancellation system **208 in** **FIG. 2** can be used to cancel a turn signal **104A, 108A or 104B, 108B** that has been activated based on detecting a turn of the vehicle **100** using the steering wheel angle sensor **212** and its completion. For example, **FIG. 5** illustrates an exemplary road intersection **500** to illustrate a vehicle **100** turn and automatic cancellation of a turn signal **104A, 108A or 104B, 108B** by the dynamically-controlled automatic turn signal cancellation system **208 in** **FIG. 2****.** Processing circuitry **214** of the dynamically-controlled automatic turn signal cancellation system **208** is configured to receive a turn signal indicator **216** indicating activation of a turn signal **104A, 108A or 104B, 108B.** The processing circuitry **214** could be a microprocessor or other central processing unit (CPU) that is configured to execute computer instructions (e.g., software, firmware) to perform tasks. For example, computer instructions **218** could be stored in a memory **220** accessible by the processing circuitry **214** as shown in **FIG. 2****.** The processing circuitry **214** could also be circuitry that does not execute software or computer instructions, but includes logic circuitry that is configured to perform tasks, such as a field programmable gate array (FPGA), or other logic circuitry (e.g., logic gates, flip-flops, and/or data buffer circuits, etc.).

In response to activation of a turn signal **104A, 108A or 104B, 108B** by activation of the turn signal stalk **204** to a permanent turn signal position **P2** or **P4** by a driver, the processing circuitry **214** in the dynamically-controlled automatic turn signal cancellation system **208** is configured to determine the average steering wheel angle **A2** based on the determined steering wheel angle **A1** based on steering wheel angle data **222** from the steering wheel angle sensor **212** like shown in **FIG.** 4. The steering wheel angle data **222** is data indicative of the steering wheel angle **A1** detected by the steering wheel angle sensor **212.** The processing circuitry **214** is configured to detect the turn based on the steering wheel angle data **222.** **FIG. 5** is an exemplary road intersection **500** that illustrates a left turn **502** and right turn **504** by the vehicle **100.** Before the turn, because the steering wheel **202** is at or approximately at the turn neutral position **400** as shown in **FIG. 4****,** the steering wheel angle **A1** is approximately zero (0) in a turn neutral position, and thus the steering wheel angle **A2** is also approximately zero (0) in a turn neutral position. The steering wheel angle **A1** is measured continuously by the processing circuitry **214** using the steering wheel angle data **222** in response to the vehicle **100** driver manually activating one of the turn signals **104A, 108A or 104B, 108B.** The steering wheel angle **A1** is measured by the processing circuitry **214** with respect to the turn neutral position **400.** The average steering wheel angle **A2** is compared to a first threshold angle **Θ1, -Θ1** by the processing circuitry **214** to detect that the vehicle **100** has really started a respective left turn **502** or right turn **504** by determining whether the driver has turned the steering wheel **202** sufficiently in the direction of the turn. The first threshold angle **Θ1, -Θ1** is positive for the left turn **502** and negative for the right turn **504.** The first threshold angle **Θ1, -Θ1** may be stored in a memory **220** accessible by the processing circuitry **214,** and may be configured to be a fixed setting or programmable.

Then, after the left turn **502** or right turn **504** has been detected, the processing circuitry **214** of the dynamically-controlled automatic turn signal cancellation system **208** determines whether the average steering wheel angle **A2** has fallen below a respective second threshold angle **+Θ2, -Θ2.** The second threshold angle is positive for the left turn **502** and negative for the right turn **504.** The second threshold angle **+Θ2, -Θ2** may also be stored in the memory **220** accessible by the processing circuitry **214,** and may be configured to be a fixed setting or programmable. Once the processing circuitry **214** of the dynamically-controlled automatic turn signal cancellation system **208** determines the average steering wheel angle **A1** or **A2** has fallen below a second threshold angle, the turn **502 or 504** is deemed completed, and the processing circuitry **214** cancels the relevant turn signals **104A, 108A or 104B, 108B.** In an alternative, if the turn signal stalk **204** is designed to remain in a turn signal position after moved to position **P2** or **P4,** the processing circuitry **214** could also be configured to issue a release command **224** to automatically return or release the turn signal stalk **204** to neutral position **P0** to cancel the turn signals **104A, 108A or 104B, 108B.** After the turn **502 or 504** is completed, the steering wheel angle **A1** and the steering wheel angle **A2** return to approximately zero (0).

Also note that the processing circuitry **214** in the dynamically-controlled automatic turn signal cancellation system **208 in** **FIG.** 2 can also be configured to interface with a speedometer **226** or other speed measurement device to receive the current speed **228** of the vehicle **100.** As discussed in more detail below, the processing circuitry **214** may be configured to use the speed of the vehicle **100** as part of the automatic turn signal cancellation. Also note that the processing circuitry **214** in the dynamically-controlled automatic turn signal cancellation system **208 in** **FIG. 2** can also be configured to interface with a secondary turn data system **230,** such as a camera, video camera, radar device, lidar device, a global positioning system (GPS) device, etc., to provide secondary turn data **232** relating to the vehicle **100.** For example, the secondary turn data **232** may be forward-looking images from a camera imaged in a direction pointed away from a given side of the vehicle **100.** As also discussed in more detail below, the processing circuitry **214** may be configured to use the secondary turn data **232** as part of the automatic turn signal cancellation.

It may be difficult for the dynamically-controlled automatic turn signal cancellation system **208 in** **FIG. 2** to distinguish between a normal turn (e.g., left turn **502** or right turn **504 in** **FIG. 5****)** and a highway lane change for controlling the cancellation of a turn signal **104A, 108A or 104B, 108B.** For example, at higher vehicle speeds, the steering wheel angle **A1** may not change as significantly in a highway lane change as in a normal turn or highway exit. Thus, it may be difficult for the dynamically-controlled automatic turn signal cancellation system **208** to recognize the difference between a normal turn, a highway lane change, or exit, based on steering wheel angle.

In this regard, the dynamically-controlled automatic turn signal cancellation system **208 in** **FIG. 2** can be configured to be a dynamically-controlled automatic turn signal cancellation system **208** in the vehicle **100.** As discussed in more detail below, in response to activation of a turn signal, the dynamically-controlled automatic turn signal cancellation system **208** can be configured to determine if the steering wheel angle **A1** (or steering wheel angle **A2)** changes beyond the first threshold angle **Θ1, -Θ1** as an indication the vehicle **100** has turned sufficiently in the direction of turn signal to signify a turn, as previously discussed. The dynamically-controlled automatic turn signal cancellation system **208** is then configured to determine when the steering wheel angle **A1** (or steering wheel angle **A2)** has fallen below the second threshold angle **Θ2, -Θ2** indicating that the vehicle **100** turn has reached the maximum steering wheel angle **A1** and the steering wheel angle **A1** is now returning towards the turn neutral position **400.** If thereafter, the steering wheel angle **A1** (or steering wheel angle **A2)** remains within a turn neutral angle window (e.g., +/- 1 radians from the turn neutral position **400)** for a determined stability time, meaning the steering wheel angle **A1** is now stable after the turn, the turn is deemed completed and the turn signal is automatically cancelled. In exemplary aspects, the stability time is dynamically determined by the dynamically-controlled automatic turn signal cancellation system **208** and its processing circuitry **214,** inversely related to a maximum steering wheel angle **A_{MAX}** of the turn. In other words, the larger the steering wheel **202** motion of the turn, the smaller the stability time will be used by the processing circuitry **214** to determine steering wheel **202** stability and turn completion. This is because a steering wheel **202** will generally return to a stable position after turn completion in a shorter period of time (e.g., <= 1.6 seconds) when recovering from a larger steering wheel **202** motion from a sharper turn (i.e., the steering wheel angle **A1** recovery has a larger slope) than from a smaller steering wheel **202** motion from a lighter turn (e.g., <= 3 seconds) (i.e., the steering wheel angle **A1** recovery has a smaller slope). Vehicles are designed to require more steering wheel force for sharp turns for stability and safety, which then causes the steering wheel to recover to a turn neutral position more quickly for sharp turns as opposed to light turns.

In this regard, **FIG. 6** is a graph **600** illustrating an exemplary turn **602** as a function based on the steering wheel angle **A1** or **A2** as function of time (t) used to discuss the ability of the dynamically-controlled automatic turn signal cancellation system **208 in** **FIG. 2** to detect the turn **602** and dynamically set a stability time for determining if an activated turn signal **104A, 108A or 104B, 108B** for the turn **602** should be automatically cancelled. Using the example of **FIG. 6****,** the dynamically-controlled automatic turn signal cancellation system 208 is configured to dynamically set the stability time based on determining a maximum steering wheel angle **A_{MAX}** of the turn **602** after detecting the turn **602** using the steering wheel angle **A1** or **A2** as compared to the first threshold angle **Θ1, -Θ1,** like described above, and detecting a start to completion of the turn using the steering wheel angle **A1** or **A2** as compared to the second threshold angle **Θ2, -Θ2,** also like described above. The dynamically set stability time is then used to determine if the steering wheel angle **A1** or **A2** thereafter remains in a turn neutral position **400** or **402,** which in this example is a turn neutral angle window **400W** or **402W** (e.g., +/- 1 radians from the turn neutral position **400** or **402)** to determine if the turn is completed and the turn signal **104A, 108A** or **104B, 108B** should be automatically cancelled. In this example, the turn neutral angle window **400W** is used if the steering wheel angle **A1** is used to detect the turn **602,** and the turn neutral angle window **402W** is used if the steering wheel angle **A2** is used to detect the turn **602.**

**FIG. 7** is a flowchart illustrating an exemplary process **700** of the processing circuitry **214** in the dynamically-controlled automatic turn signal cancellation system **208** in **FIG. 2** automatically canceling a turn signal **104A, 108A** or **104B, 108B** based on detecting a turn, like turn **602** in **FIG. 6****,** that has been completed as a function of steering wheel angle **A1** or **A2** remaining within a turn neutral angle window for the dynamically set stability time according to a determined maximum steering wheel angle **A_{MAX}** of a vehicle turn. The exemplary process **700** in **FIG. 7** is discussed below with reference to the exemplary turn **602** in **FIG. 6****,** but such is not limiting.

In this regard, as illustrated in **FIG. 6****,** at time **t0,** the steering wheel angle **A1** or **A2** is zero (0) as indicated by steering angle curve **604** meaning that the steering wheel **202** of the vehicle **100** is located at or approximately at the turn neutral position **400** or **402** (see **FIG. 4****).** This means the vehicle wheels **110** are substantially straight and is not turning at this time. Turn signal curve **606,** that is, a dashed box in the form of a square wave in this example, illustrates the state of the turn signals **104A, 108A** or **104B, 108B** being activated, with a zero (0) value meaning the turn signals **104A, 108A** or **104B, 108B** are not activated, and a step up meaning turn signals **104A, 108A** or **104B, 108B** are activated. Then, as shown in **FIG. 6****,** the turn signal activator **106** is activated at time **t1** to activate a turn signal **104A, 108A** or **104B, 108B.** The processing circuitry **214** is configured to detect this activation of the turn signal **104A, 108A** or **104B, 108B** (e.g., based on the turn signal indicator **216** in **FIG. 2****)** (block **702** in **FIG. 7****).** In response to the activation of the turn signal activator **106** (block **704** in **FIG. 7****),** the processing circuitry **214** is configured to detect the steering wheel angle **A1** or **A2** related to turning of the steering wheel **202** of the vehicle **100** in the direction of the turn signal **104A, 108A** or **104B, 108B.** If the processing circuitry **214** does not detect the turn **602** based on the steering wheel angle **A1** or **A2** in the same direction as the turn signal **104A, 108A** or **104B, 108B,** the process **700** may be discontinued or another process used to perform automatic turn signal cancellation. Note that at time **t2** in the turn **602** in **FIG. 6****,** the steering wheel angle **A1** or **A2** starts to become positive, meaning that a possible turn is starting by the driver of the vehicle **100** starting the turning the steering wheel **202.** In this example in **FIG. 6****,** the turn **602** is a left turn, and thus the first threshold angle **Θ1** is a positive angle. However, the processing circuitry **214** does not consider the increase in the steering wheel angle **A1** or **A2** to be a turn in this example until the steering wheel angle **A1** or **A2** exceeds the first threshold angle **Θ1** at time t3. For example, the first threshold angle **Θ1** may be a fixed angle value or may be dynamically set based on the speed of the vehicle **100** at the time the turn signal **104A, 108A** or **104B, 108B** is activated, as discussed in more detail below with regard to **FIG. 7****.** In the example turn **602** in **FIG. 6****,** the first threshold angle **Θ1** is approximately 0.42 radians.

With continuing reference to **FIG. 6****,** the processing circuitry **214** is then configured to detect the steering wheel angle **A1** or **A2** related to turning of the steering wheel **202** exceeding the first threshold angle **Θ1, -Θ1** from a turn neutral position indicating the turn **602** (block **706** in **FIG. 7****).** In this example, the processing circuitry **214** is configured to detect the steering wheel angle **A1** or **A2** exceeding the first threshold angle **Θ1** from a turn neutral angle window **400W** or **402W** with an angle range (+1/-1 radian in this example) around the turn neutral position **400** or **402.** Thereafter, in response to the processing circuitry **214** detecting the steering wheel angle **A1** or **A2** exceeding the first threshold angle threshold angle **Θ1** (block **708** in **FIG. 7****),** the processing circuitry **214** is configured to detect the steering wheel angle **A1** or **A2** has fallen below the second threshold angle **Θ2** less than the first threshold angle **Θ1** and towards the turn neutral position **400, 402** (block **710** in **FIG. 7****).** This is shown at time **t5** in **FIG. 6****.** This means that the turn **602** has reached its maximum steering wheel angle **A_{MAX},** and the steering wheel **202** is starting to be turned back or let recover back towards the turn neutral position **400, 402.** The processing circuitry **214** determines the maximum steering wheel angle **A_{MAX}** of the turn **602** after the steering wheel angle **A1** or **A2** exceeds the first threshold angle **Θ1,** which is shown at time **t4** in **FIG. 6** (block **712** in **FIG.** 7).

Then, with continuing reference to **FIG. 6****,** after the processing circuitry **214** detects that the steering wheel angle **A1** or **A2** has fallen below the second threshold angle **Θ2** (less than the first threshold angle **Θ1)** and towards the turn neutral position **400, 402** (block **714** in **FIG. 7****)** such that the maximum steering wheel angle **A_{MAX}** can be determined (block **712** in **FIG.** 7), the processing circuitry **214** dynamically sets a stability time ts for the steering wheel angle **A1** or **A2** based on the determined maximum steering wheel angle **A_{MAX}** (block **716** in **FIG. 7****).** In this manner, the stability time **ts** is dynamically determined inversely related to maximum steering wheel angle **A1** or **A2** of the turn **602.** In other words, the larger the steering wheel **202** motion of the turn **602,** the smaller the stability time **ts** used to determine steering wheel **202** stability and turn **602** completion will be. This is because the steering wheel **202** will generally return to a stable position (i.e., turn neutral position **400, 402)** after turn completion in a shorter period of time (e.g., <= 1.6 seconds) when recovering from a larger steering wheel **202** motion from a sharper turn (i.e., the steering wheel angle **A1** or **A2** recovery has a larger slope) than from a smaller steering wheel **202** motion from a lighter turn (e.g., <= 3 seconds) (i.e., the steering wheel angle **A1** or **A2** recovery has a smaller slope). Vehicles are designed to require more steering wheel force for sharp turns for stability and safety, which then causes the steering wheel to recover to a turn neutral position more quickly for sharp turns as opposed to light turns. In this manner, by the processing circuitry **214** being configured to dynamically set the stability time **ts** for the steering wheel angle **A1** or **A2** based on the determined maximum steering wheel angle **A_{MAX}** (block **716** in **FIG. 7****),** the processing circuitry **214** can be more accurate in actually determining if and when the turn **602** is actually completed, as opposed to having to use a fixed or preset stability time.

For example, if a fixed or preset stability time that was set to a reduced time to more accurately detect completion of a sharper turn was used, this may be too short of a stability time to detect completion of a lighter turn. Thus, turn signals for a lighter turn may not be automatically cancelled properly or accurately. Similarly, if a fixed stability time was used that was set to an increased time to more accurately detect completion of a lighter turn, this may be too long a stability time to accurately detect when a sharper turn is completed, thus delaying cancellation of the turn signal after the shaper turn is completed.

With continuing reference to **FIG. 6****,** the processing circuitry **214** then determines whether the steering wheel angle **A1** or **A2** remains in the turn neutral angle window **400W** or **402W** after entering the turn neutral angle window **400W** or **402W** at time **t6** for at least the set stability time **ts** (block **718** in **FIG. 7****).** The processing circuitry **214** determines whether the steering wheel angle **A1** or **A2** remains in the turn neutral angle window **400W** or **402W** for the stability time **ts** starting at time **t6** when the steering wheel angle **A1** or **A2** enters back into the turn neutral angle window **400W** or **402W** after the steering wheel angle **A1** or **A2** falls below the second threshold angle **Θ2.** If the processing circuitry **214** determines that the steering wheel angle **A1** or **A2** remains in the turn neutral angle window **400W** or **402W** during the set stability time **ts,** this means that the steering wheel **202** and the vehicle wheels **110** are substantially no longer turning for the stability time **ts,** thus indicating the turn **602** has completed, and the turn signal **104A, 108A** or **104B, 108B** is cancelled by the processing circuitry **214** (block **720** in **FIG. 7****).** In this example turn **602** in **FIG. 6****,** the stability time **ts** extends from time **t6** to time **t7.** As shown in **FIG. 6****,** the steering wheel angle **A1** or **A2** remains in the turn neutral angle window **400W** or **402W** during the set stability time **ts** between time **t6** and time **t7.** If the steering wheel angle **A1** or **A2** did not remain in the turn neutral angle window **400W** or **402W** during the set stability time ts between time **t6** and time **t7,** and instead increased outside the turn neutral angle window **400W** or **402W,** the turn signal **104A, 108A** or **104B, 108B** would not be cancelled until steering wheel angle **A1** or **A2** returned inside and remained in turn neutral angle window **400W** or **402W** for at least the set stability time **ts.**

In an example, as shown in **FIG. 6****,** the turn neutral angle window **400W** or **402W** can be +/- 1 radian, but could also be a different window size around the turn neutral position **400** or **402.** The size of the turn neutral angle window **400W** or **402W** can be determined based on empirical testing or other data so as to not be too narrow of an angle window for accurately and consistently detecting a turn completion that had actually been completed, but not too wide to prematurely detect a turn completion that was not yet completed.

In another example, the dynamically-controlled automatic turn signal cancellation system **208** and its processing circuitry **214** may be configured to set the stability time **ts** to three (3) seconds if the maximum steering wheel angle **A_{MAX}** is determined to be less than +/-0.17 radians, meaning a lighter turn. In another example, the dynamically-controlled automatic turn signal cancellation system **208** and its processing circuitry **214** may be configured to set the stability time **ts** to 1.6 seconds if the maximum steering wheel angle **A_{MAX}** is determined to be greater than or equal to +/- 0.19 radians, meaning a sharper turn. In another example, the dynamically-controlled automatic turn signal cancellation system **208** and its processing circuitry **214** may be configured to set the stability time **ts** to two (2) seconds if the maximum steering wheel angle **A_{MAX}** is determined to be greater than or equal to +/-0.17 radians, but less than +/- 0.19 radians, meaning a mid-turn between a lighter turn and sharper turn.

As discussed above, the dynamically-controlled automatic turn signal cancellation system **208** is configured to detect a turn based on the steering wheel angle **A1** or **A2 exceeding** the first threshold angle **Θ1, -Θ1.** However, the steering wheel angle **A1** or **A2** change needed to perform a given turn is inversely related to vehicle **100** speed due to increased centripetal force and inertia of a vehicle **100** turn at higher speeds. In other words, the faster the vehicle **100** speed, the less steering wheel angle **A1** or **A2** change is required to perform the desired turn. Thus, if a fixed or preset first threshold angle **Θ1, -Θ1** is used by the dynamically-controlled automatic turn signal cancellation system **208** to detect a turn, such may not always result in an accurate turn detection. For example, if the first threshold angle **Θ1, -Θ1** were preset to a fixed higher threshold angle, the steering wheel angle **A1** or **A2** may not exceed the first threshold angle **Θ1, -Θ1** for a turn at a higher vehicle **100** speed. Similarly, if the first threshold angle **Θ1, -Θ1** were preset to a fixed lower threshold angle, the steering wheel angle **A1** or **A2** may exceed the first threshold angle **Θ1, -Θ1** for a turn at a lower vehicle **100** speed that is not actually a turn.

Thus, in other exemplary aspects, the dynamically-controlled automatic turn signal cancellation system **208** can also be configured to dynamically set the first threshold angle **Θ1, -Θ1** that was used to indicate the vehicle **100** had turned sufficiently in the direction of the turn signal **104A, 108A or 104B, 108B** based on the speed of the vehicle **100.** This is because the steering wheel angle **A1** or **A2** change needed to perform a given turn is inversely related to vehicle **100** speed due to increased centripetal force and inertia of a vehicle **100** turn at higher speeds. In other words, the faster a vehicle **100** speed, the less steering wheel angle **A1** or **A2** change is required to perform the desired turn. Thus, in this example, in response to a turn signal being activated, the speed of the vehicle **100** can also be determined. The speed of the vehicle **100** can then be used to dynamically calculate and set the first threshold angle **Θ1, -Θ1** used to indicate the vehicle **100** has turned sufficiently in the direction of turn signal **104A, 108A or 104B, 108B.** The higher the speed of the vehicle **100,** the less change in steering wheel angle **A1** or **A2** is required to accomplish a desired turn. Thus, the dynamically-controlled automatic turn signal cancellation system **208** determining the vehicle **100** has a higher speed in response to a turn signal activation will cause the dynamically-controlled automatic turn signal cancellation system **208** to use a smaller angle as the first threshold angle **Θ1, -Θ1** used to indicate the vehicle **100** has turned sufficiently in the direction of the turn signal **104A, 108A** or **104B, 108B** than if the vehicle **100** had a slower speed. In this manner, the stability time to determine if the turn signal **104A, 108A** or **104B, 108B** should be cancelled will inherently be dynamically based on the maximum steering wheel angle **A_{MAX}** of the turn that affects the slope of the steering wheel angle **A1** or **A2** falling back below the second threshold angle **Θ2, -Θ2.** Thus, a larger steering wheel angle **A1** or **A2** slope means a sharper turn at a lower speed, and thus less stability time provided, and a smaller steering wheel angle **A1** or **A2** slope means a lighter turn at a higher speed, and more stability time provided.

In this regard, **FIG. 8** is a flowchart illustrating another exemplary process **800** of the processing circuitry **214** in the dynamically-controlled automatic turn signal cancellation system **208** in **FIG. 2** that includes the process **700** in **FIG. 7** to detect a turn and automatically cancel the turn signal **104A, 108A** or **104B, 108B.** However, the process **800** in **FIG. 8** also includes dynamically setting the first threshold angle of steering wheel angle **A1** or **A2** used to detect the turn as function of vehicle **100** speed. Common steps between the process **700** in **FIG. 7** and the process **800** in **FIG. 8** are shown, while common step numbers between **FIG. 7** and **FIG. 8** and are not re-discussed. As shown in **FIG. 8****,** the processing circuitry **214** is configured to detect the activation of the turn signal **104A, 108A** or **104B, 108B** (e.g., based on the turn signal indicator **216** in **FIG. 2****)** like in the process **700** in **FIG.** 7 (block **702** in **FIG.** 7). In response to the activation of the turn signal activator **106** (block **704** in **FIG. 7****),** the processing circuitry **214** is configured to detect the steering wheel angle **A1** or **A2** related to turning of the steering wheel **202** of the vehicle **100,** like in the process **700** in **FIG.** 7. Then, as shown in **FIG. 8****,** the processing circuitry **214** is configured to detect a speed of the vehicle **100** (block **802** in **FIG. 8****)** in response to the activation of the turn signal **104A, 108A** or **104B, 108B.** The processing circuitry **214** can be configured to receive the current speed **228** of the vehicle **100** from the speedometer **226** as shown in **FIG. 2****,** as an example. The processing circuitry **214** is then configured to set the first threshold angle **Θ1, -Θ1** relative to the turn neutral position **400** or **402** based on the speed of the vehicle **100** (block **804** in **FIG. 8****).** The processing circuitry **214** can be configured to the set first threshold angle **Θ1, -Θ1** relative to the turn neutral position **400** or **402** based on an inverse relationship with the speed of the vehicle **100.** In this manner, the processing circuitry **214** uses the dynamically set first threshold angle **Θ1, -Θ1** that is a function of the speed of the vehicle 100 to determine if a turn is detected by the steering wheel angle **A1** or **A2** exceeding the dynamically set first threshold angle **Θ1, -Θ1** (block **706** in **FIG. 8****).**

For example, Tables 1A and 1B below illustrate an exemplary correlation of first threshold angle **Θ1, -Θ1** and second threshold angle **Θ2, -Θ2** to speed of the vehicle **100** in kilometers (km) per hour (h) (km/h). These correlations can be used to dynamically used to set the first threshold angle **Θ1, -Θ1** and/or the second threshold angle **Θ2, -Θ2** a function of the speed of the vehicle 100 to determine if a turn is detected by the steering wheel angle **A1** or **A2** exceeding the dynamically set first threshold angle **Θ1, -Θ1** (block **706** in **FIG. 8****).**

**Table 1A:**

| Speed **(228)** km/hr | 0-5 | 5-10 | 10-15 | 15-20 | 20-25 | 25-30 | 30-35 |
|---|---|---|---|---|---|---|---|
| **A1** | 4 | 4 | 4 | 4 | 4 | 2.93 | 1 |
| **Θ1** | 0.09 | 0.09 | 0.09 | 0.09 | 0.09 | 0.09 | 0.09 |
| **Θ2** | 0.75 | 0.75 | 0.75 | 0.75 | 0.75 | 0.75 | 0.75 |

**Table 1B:**

| Speed **(228)** km/hr | 35-40 | 40-45 | 45-50 | 50-55 | 55-60 | 60-65 | 65-90 |
|---|---|---|---|---|---|---|---|
| **A1** | 1 | 1 | 1 | 1 | 1 | 1 | |
| **Θ1** | 0.06 | 0.06 | 0.06 | 0.0552 | 0.0552 | 0.0552 | 0.0552 |
| **Θ2** | 0.75 | 0.75 | 0.75 | 0.75 | 0.75 | 0.75 | 0.75 |

The remaining steps in the process **800** in **FIG. 8** are the same as in the process **700** in **FIG. 7** in this example, as shown by common step numbers.

As an example, if the first threshold angle **Θ1, -Θ1** is set to greater than 0.0553 radians by the processing circuitry **214** as a function of the speed of the vehicle **100** as described above, the processing circuitry **214** may use the stability times discussed above based on the maximum steering wheel angle **A_{MAX}** in the detected turn being less than 0.17 radians, greater than or equal to 0.17 radians and less than 0.19 radians, and greater than 0.19 radians. In another example, if the first threshold angle **Θ1, -Θ1** is set to less than or equal to 0.0553 radians by the processing circuitry **214** as a function of the speed of the vehicle **100** as described above, the processing circuitry **214** may be configured to set the stability time to 1.5 seconds irrespective of the determined maximum steering wheel angle **A_{MAX}** in the detected turn. This is because with a speed of the vehicle **100** being faster, such that the first threshold angle **Θ1, -Θ1** is set to less than or equal 0.0553 radians, a larger change in steering wheel angle **A1** or **A2** and thus a larger slope in the steering wheel angle **A1** or **A2** is not expected for the turn, and thus the stability time of 1.5 seconds may be sufficient to accurately determine the completion of the turn for automatic turn signal cancellation.

In other exemplary aspects, the dynamically-controlled automatic turn signal cancellation system **208** can also be configured to distinguish between a simple turn (e.g., a simple turn and/or roundabout ), as compared to highway turning for automatic turn signal cancellation. Highway turning is turning that does not necessarily involve sharp steering wheel angle **A1** or **A2** changes, such as when the vehicle **100** performs a highway lane change **900** like shown in **FIG. 9A** or highway merging **902** like shown in **FIG. 9B****,** or even highway exiting. This is because less steering wheel angle **A1** or **A2** change is required to perform a turn in a vehicle as at higher speeds that are generally present in highway driving, because the steering wheel angle **A1** or **A2** change needed to perform a given turn is inversely related to vehicle speed due to increased centripetal force and inertia of the vehicle **100** turn at higher speeds. Thus, in highway turning, the detection of steering wheel angle **A1** or **A2** used for detection of simple turns and/or roundabouts may not be significant enough to detect highway turning for automatic turn signal cancellation after the highway turn is completed.

Thus, in other exemplary aspects, to be able to cancel a turn signal after completion of a highway turn that is not detectable through steering wheel angle **A1** or **A2** change based on exceeding the first threshold angle **Θ1, -Θ1** (e.g., a dynamically set first threshold angle **Θ1, -Θ1** based on vehicle speed), the dynamically-controlled automatic turn signal cancellation system **208** can also be configured to cancel the turn signal **104A, 108A** or **104B, 108B** based on detecting a highway turn using a secondary turn detection system, such as the secondary turn data system **230** in **FIG. 2****.** For example, the secondary turn data system **230** may be a forward-looking camera (FLC) that can provide forward-looking images as part of the secondary turn data **232,** that can be processed by the processing circuitry **214** to detect a highway turn by the vehicle **100** that may not otherwise be detectable using the steering wheel angle **A1** or **A2** change.

In this regard, **FIG. 10** is a flowchart illustrating an exemplary process **1000** of the dynamically-controlled automatic turn signal cancellation system **208** in **FIG. 2** also being configured to cancel a turn signal turn signal **104A, 108A** or **104B, 108B** of the vehicle **100** in response to detecting a highway turn by the vehicle when the change in steering wheel angle **A1** or **A2** is not significant enough to be detected as vehicle turn. As discussed above, to accurately provide other automatic turn signal cancellation using the steering wheel angle **A1** or **A2,** the change in steering wheel angle **A1** or **A2** may have to be significant enough to distinguish an actual turn to prevent false turn signal cancellations. Common steps between the process **700** in **FIG. 7** and the process **1000** in **FIG. 10** are shown with common step numbers between **FIG. 7** and **FIG. 10****.**

As shown in **FIG. 10****,** the processing circuitry **214** is configured to detect this activation of the turn signal **104A, 108A** or **104B, 108B** (e.g., based on the turn signal indicator **216** in **FIG. 2****)** like in the process **700** in **FIG. 7** (block **702** in **FIG. 7****).** In response to the activation of the turn signal activator **106** (block **704** in **FIG.** 7), the processing circuitry **214** is configured to detect the steering wheel angle **A1** or **A2** related to turning of the steering wheel **202** of the vehicle **100** like in the process **700** in **FIG. 7****.** Then, as shown in **FIG. 10****,** the processing circuitry **214** is configured to detect a highway turn (e.g., a lane change, a highway merge, a highway exiting) by the vehicle **100** while the steering wheel angle **A1** or **A2** is within a turn neutral position **400, 402** or turn neutral angle window **400W, 402W,** or before the steering wheel angle **A1** or **A2** exceeds the first threshold angle **Θ1, -Θ1** (block **1002** in **FIG. 10****).** The processing circuitry **214** can be configured to detect the highway turn using the secondary turn data **232** from the secondary turn data system **230** as discussed above. For example, the processing circuitry **214** may be configured to detect the highway turn by receiving one or more images (e.g., forward-looking images) from the secondary turn data **232** if the secondary turn data system **230** is a camera or imaging system (e.g., a forward-looking camera (FLC)). As another example, the processing circuitry **214** may be configured to detect the highway turn by receiving secondary turn data **232** as GPS data if the secondary turn data system **230** is a GPS device. In response to detecting the highway turn of the vehicle **100,** the processing circuitry **214** is configured to automatically cancel the activated turn signal **104A, 108A** or **104B, 108B** (block **1004** in **FIG. 10****).**

**FIG. 11** is a block diagram of an exemplary computer system **1100** that can be included in a dynamically-controlled automatic turn signal cancellation system, including but not limited to the dynamically-controlled automatic turn signal cancellation system **208 in** **FIG. 2****,** configured to automatically cancel a turn signal based on detecting a completed turn as a function of the steering wheel angle remaining within a turn neutral angle window for a determined stability time, wherein the stability time is dynamically set according to the determined maximum steering wheel angle of the turn.

The computer system **1100** is adapted to execute instructions from a computer-readable medium to perform these and/or any of the functions or processing described herein. The computer system **1100** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), automatic turn signal cancellation system, processor device, processing circuitry, etc., includes reference to one or more such devices to individually or jointly execute a set (or multiple sets) of instructions to perform any one or more of the methodologies discussed herein. For example, a control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include processing circuitry **1102** (e.g., processing circuitry including one or more processor devices or control units) that could be the processing circuitry **214** in the dynamically-controlled automatic turn signal cancellation system **208 in** **FIG. 2****.** The computer system **1100** also includes a memory **1104** (that could be or include the memory **220 in** **FIG. 2****)** and a system bus **1106.** The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104,** including the computer instructions **218** executed by the processing circuitry **214** in the dynamically-controlled automatic turn signal cancellation system **208 in** **FIG. 2****.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions (e.g., computer instructions **218),** and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system 1116 and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions (e.g., computer instructions **218)** for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made, within the scope of the following claims. In the drawings and specification, there have been disclosed aspects for purposes of illustration only and not for purposes of limitation, the scope of the invention being set forth in the following claims.

## Claims

1. An automatic turn signal cancellation system (208) comprising processing circuitry (214, 1102) configured to, in response to activation of a turn signal (104A, 108A, 104B, 108B) in a vehicle(100):
detect a steering wheel angle (A1, A2) related to turning of a steering wheel (202) of the vehicle (100) exceeding a first threshold angle (Θ1, -Θ1) from a turn neutral position (400, 402) indicating a turn; and
in response to detecting the steering wheel (202) exceeding the first threshold angle(Θ1, -01):
detect that the steering wheel angle (A1, A2) has fallen below a second threshold angle (Θ2, -Θ2) less than the first threshold angle (Θ1, -02) and towards the turn neutral position(400, 402);
determine a maximum steering wheel angle (A_{MAX}) related to turning of the steering wheel (202) after the steering wheel angle (A1, A2) exceeded the first threshold angle(Θ1, -Θ1); and
in response to detecting that the steering wheel angle (A1, A2) has fallen below the second threshold angle(Θ2, -Θ2):
set a stability time (ts) based on the determined maximum steering wheel angle(A_{MAX});
determine whether the steering wheel angle (A1, A2) remains in a turn neutral angle window (400W, 402W) for the set stability time (ts); and
in response to determining the steering wheel angle (A1, A2) remains in the turn neutral angle window (400W, 402W) for the set stability time (ts), cancel the turn signal (104A, 108A, 104B, 108B).

2. The automatic turn signal cancellation system of claim 1, wherein the processing circuitry is further configured to, in response to determining the steering wheel angle does not remain in the turn neutral angle window for the set stability time, not cancel the turn signal.

3. The automatic turn signal cancellation system of any of claims 1-2, wherein the processing circuitry is configured to set the stability time inversely to the determined maximum steering wheel angle.

4. The automatic turn signal cancellation system of any of claims 1-3, wherein the processing circuitry is further configured to, in response to activation of the turn signal in the vehicle:
determine a speed of the vehicle; and
set the first threshold angle relative to the turn neutral position based on the speed of the vehicle.

5. The automatic turn signal cancellation system of claim 4, wherein the processing circuitry is configured to set the first threshold angle relative to the turn neutral position of the steering wheel inversely to the speed of the vehicle.

6. The automatic turn signal cancellation system of any of claims 4-5, wherein the processing circuitry is configured to:
detect the steering wheel angle exceeding the first threshold angle in the direction of the turn signal; and
in response to detecting the steering wheel angle exceeding the first threshold angle in the direction of the turn signal:
detect that the steering wheel angle has fallen below the second threshold angle less than the first threshold angle towards the turn neutral position; and
in response to detecting that the steering wheel angle has fallen below the second threshold angle:
determine the maximum steering wheel angle after the steering wheel angle exceeded the first threshold angle;
set the stability time based on the determined maximum steering wheel angle;
determine whether the steering wheel angle remains in the turn neutral angle window for the set stability time; and
in response to determining the steering wheel angle remains in the turn neutral angle window for the set stability time, cancel the turn signal.

7. The automatic turn signal cancellation system of any of claims 1-6, wherein the turn neutral angle window is between -1 radian and 1 radian.

8. The automatic turn signal cancellation system of any of claims 1-7, wherein, in response to activation of the turn signal, the processing circuity is further configured to:
detect a highway turn by the vehicle while the steering wheel angle is within the turn neutral position; and
in response to detecting the highway turn, cancel the turn signal.

9. The automatic turn signal cancellation system of claim 8, wherein the processing circuity is configured to detect the highway turn by being configured to:
receive at least one image from an imaging system (230); and
determine whether the highway turn occurred based on the received at least one image.

10. The automatic turn signal cancellation system of claim 8, wherein the processing circuity is configured to detect the highway turn by being configured to:
receive turn data (232) of the vehicle generated by a global-positioning system, GPS (230); and
determine whether the highway turn occurred based on the received turn data.

11. A vehicle comprising the automatic turn signal cancellation system of any of claims 1-10.

12. A method of automatically canceling a turn signal (104A, 108A, 104B, 108B) in a vehicle (100), comprising:
detecting, by a processing circuitry (214, 1102), activation of a turn signal (104A, 108A, 104B, 108B) in the vehicle (100); and
in response to detecting activation of the turn signal (104A, 108A, 104B, 108B):
detecting, by the processing circuitry (214, 1102), a steering wheel angle (A1, A2) related to turning of a steering wheel (202) of the vehicle (100) exceeding a first threshold angle (Θ1, -Θ1) from a turn neutral position (400, 402) indicating a turn; and
in response to the processing circuity (214, 1102) detecting the steering wheel angle (A1, A2) exceeding the first threshold angle (Θ1, -01):
detecting, by the processing circuitry (214, 1102), that the steering wheel angle (A1, A2) has fallen below a second threshold angle (Θ2, -Θ2) less than the first threshold angle (Θ1, -Θ1) and towards the turn neutral position (400, 402);
determining, by the processing circuitry (214, 1102), a maximum steering wheel angle (A_{MAX}) related to turning of the steering wheel (202) after the steering wheel angle (A1, A2) exceeded the first threshold angle (Θ1, -Θ1); and
in response to the processing circuitry (214, 1102) detecting that the steering wheel angle (A1, A2) has fallen below the second threshold angle (Θ2, -Θ2):
setting, by the processing circuitry (214, 1102), a stability time (ts) based on the determined maximum steering wheel angle (A_{MAX});
determining, by the processing circuitry (214, 1102), whether the steering wheel angle (A1, A2) remains in a turn neutral angle window (400W, 402W) for the set stability time (ts); and
canceling, by the processing circuitry (214, 1102), the turn signal (104A, 108A, 104B, 108B) in response to determining the steering wheel angle (A1, A2) remains in the turn neutral angle window (400W, 402W) for the set stability time (ts).

13. The method of claim 12, further comprising, in response to activation of the turn signal in the vehicle:
determining a speed of the vehicle; and
setting the first threshold angle relative to the turn neutral position based on the speed of the vehicle.

14. A computer program product (1114) comprising program code (1120) for performing, when executed by the processing circuitry, the method of claim 12.

15. A non-transitory computer-readable storage medium (1114) comprising instructions (218), which, when executed by the processing circuitry, cause the processing circuitry to perform the method of claim 12.

## Patentansprüche

1. Automatisches Blinksignal-Rückstellsystem (208), das einen Verarbeitungsschaltkreis (214, 1102) umfasst, der dazu konfiguriert ist, als Reaktion auf die Aktivierung eines Blinksignals (104A, 108A, 104B, 108B) in einem Fahrzeug (100):
einen Lenkradwinkel (A1, A2) im Zusammenhang mit dem Drehen eines Lenkrads (202) des Fahrzeugs (100) zu erkennen, der einen ersten, einen Abbiegevorgang anzeigenden Schwellenwinkel (Θ1, -Θ1) aus einer Nullstellung der Lenkung (400, 402) überschreitet; und
als Reaktion auf das Erkennen, dass das Lenkrad (202) den ersten Schwellenwinkel (Θ1, -Θ1) überschreitet:
Erkennen, dass der Lenkradwinkel (A1, A2) unter einen zweiten Schwellenwinkel (Θ2, -Θ2), der kleiner ist als der erste Schwellenwinkel (Θ1, -Θ1), und in Richtung der Nullstellung der Lenkung (400, 402) gefallen ist;
Bestimmen eines maximalen Lenkradwinkels (A_{MAX}) im Zusammenhang mit dem Drehen des Lenkrads (202), nachdem der Lenkradwinkel (A1, A2) den ersten Schwellenwinkel (Θ1, -Θ1) überschritten hat; und
als Reaktion auf das Bestimmen, dass der Lenkradwinkel (A1, A2) unter den zweiten Schwellenwinkel (Θ2, -Θ2) gefallen ist:
Einstellen einer Stabilitätszeit (ts) basierend auf dem bestimmten maximalen Lenkradwinkel (A_{MAX});
Bestimmen, ob der Lenkradwinkel (A1, A2) für die eingestellte Stabilitätszeit (ts) innerhalb eines Fensters für einen neutralen Lenkwinkel (400W, 402W) bleibt; und
als Reaktion auf das Bestimmen, dass der Lenkradwinkel (A1, A2) für die eingestellte Stabilitätszeit (ts) innerhalb des Fensters für den neutralen Lenkwinkel (400W, 402W) bleibt, Zurückstellen des Blinksignals (104A, 108A, 104B, 108B).

2. Automatisches Blinksignal-Rückstellsystem nach Anspruch 1, wobei der Verarbeitungsschaltkreis ferner dazu konfiguriert ist, als Reaktion auf das Bestimmen, dass der Lenkradwinkel für die eingestellte Stabilitätszeit nicht innerhalb des Fensters für den neutralen Lenkwinkel bleibt, das Blinksignal nicht zurückzustellen.

3. Automatisches Blinksignal-Rückstellsystem nach einem der Ansprüche 1-2, wobei der Verarbeitungsschaltkreis dazu konfiguriert ist, die Stabilitätszeit entgegengesetzt zum bestimmten maximalen Lenkradwinkel einzustellen.

4. Automatisches Blinksignal-Rückstellsystem nach einem der Ansprüche 1-3, wobei der Verarbeitungsschaltkreis ferner dazu konfiguriert ist, als Reaktion auf die Aktivierung des Blinksignals im Fahrzeug:
eine Geschwindigkeit des Fahrzeugs zu bestimmen; und
den ersten Schwellenwinkel relativ zur Nullstellung der Lenkung basierend auf der Geschwindigkeit des Fahrzeugs einzustellen.

5. Automatisches Blinksignal-Rückstellsystem nach Anspruch 4, wobei der Verarbeitungsschaltkreis dazu konfiguriert ist, den ersten Schwellenwinkel relativ zur Nullstellung der Lenkung des Lenkrads entgegengesetzt zur Geschwindigkeit des Fahrzeugs einzustellen.

6. Automatisches Blinksignal-Rückstellsystem nach einem der Ansprüche 4-5, wobei der Verarbeitungsschaltkreis für Folgendes konfiguriert ist:
Erkennen, dass der Lenkradwinkel den ersten Schwellenwinkel in Richtung des Blinksignals überschreitet; und
als Reaktion auf das Erkennen, dass der Lenkradwinkel den ersten Schwellenwinkel in Richtung des Blinksignals überschreitet:
Erkennen, dass der Lenkradwinkel unter den zweiten Schwellenwinkel, der kleiner ist als der erste Schwellenwinkel, und in Richtung der Nullstellung der Lenkung gefallen ist; und
als Reaktion auf das Erkennen, dass der Lenkradwinkel unter den zweiten Schwellenwinkel gefallen ist:
Bestimmen des maximalen Lenkradwinkels, nachdem der Lenkradwinkel den ersten Schwellenwert überschritten hat;
Einstellen der Stabilitätszeit basierend auf dem bestimmten maximalen Lenkradwinkel;
Bestimmen, ob der Lenkradwinkel für die eingestellte Stabilitätszeit innerhalb des Fensters für den neutralen Lenkwinkel bleibt; und
als Reaktion auf das Bestimmen, dass der Lenkradwinkel für die eingestellte Stabilitätszeit innerhalb des Fensters für den neutralen Lenkwinkel bleibt, Zurückstellen des Blinksignals.

7. Automatisches Blinksignal-Rückstellsystem nach einem der Ansprüche 1-6, wobei das Fenster für den neutralen Lenkwinkel zwischen -1 Radiant und 1 Radiant liegt.

8. Automatisches Blinksignal-Rückstellsystem nach einem der Ansprüche 1-7, wobei der Verarbeitungsschaltkreis als Reaktion auf die Aktivierung des Blinksignals ferner für Folgendes konfiguriert ist:
Erkennen eines Abbiegevorgangs des Fahrzeugs auf der Autobahn, während sich der Lenkradwinkel innerhalb der Nullstellung der Lenkung befindet; und
als Reaktion auf das Erkennen des Abbiegevorgangs auf der Autobahn, Zurückstellen des Blinksignals.

9. Automatisches Blinksignal-Rückstellsystem nach Anspruch 8, wobei der Verarbeitungsschaltkreis dazu konfiguriert ist, den Abbiegevorgang auf der Autobahn zu erkennen, indem er für Folgendes konfiguriert ist:
Empfangen mindestens eines Bilds von einem Bildgebungssystem (230); und
Bestimmen, ob der Abbiegevorgang auf der Autobahn aufgetreten ist, basierend auf dem empfangenen mindestens einen Bild.

10. Automatisches Blinksignal-Rückstellsystem nach Anspruch 8, wobei der Verarbeitungsschaltkreis dazu konfiguriert ist, den Abbiegevorgang auf der Autobahn zu erkennen, indem er für Folgendes konfiguriert ist:
Empfangen von Abbiegevorgangsdaten (232) des Fahrzeugs, die von einem globalen Positionierungssystem, GPS, (230) erzeugt werden; und
Bestimmen, ob der Abbiegevorgang auf der Autobahn aufgetreten ist, basierend auf den empfangenen Abbiegevorgangsdaten.

11. Fahrzeug, das das automatische Blinksignal-Rückstellsystem nach einem der Ansprüche 1-10 umfasst.

12. Verfahren zum automatischen Zurückstellen eines Blinksignals (104A, 108A, 104B, 108B) in einem Fahrzeug (100), umfassend:
Erkennen der Aktivierung eines Blinksignals (104A, 108A, 104B, 108B) im Fahrzeug (100) durch einen Verarbeitungsschaltkreis (214, 1102); und
als Reaktion auf das Erkennen der Aktivierung des Blinksignals (104A, 108A, 104B, 108B):
Erkennen, durch den Verarbeitungsschaltkreis (214, 1102), eines Lenkradwinkels (A1, A2) im Zusammenhang mit dem Drehen eines Lenkrads (202) des Fahrzeugs (100), der einen ersten, einen Abbiegevorgang anzeigenden Schwellenwinkel (Θ1, -Θ1) aus einer Nullstellung der Lenkung (400, 402) überschreitet; und
als Reaktion darauf, dass der Verarbeitungsschaltkreis (214, 1102) erkennt, dass der Lenkradwinkel (A1, A2) den ersten Schwellenwinkel (Θ1, -Θ1) überschreitet:
Erkennen durch den Verarbeitungsschaltkreis (214, 1102), dass der Lenkradwinkel (A1, A2) unter einen zweiten Schwellenwinkel (Θ2, -Θ2), der kleiner ist als der erste Schwellenwinkel (Θ1, -Θ1), und in Richtung der Nullstellung der Lenkung (400, 402) gefallen ist;
Bestimmen, durch den Verarbeitungsschaltkreis (214, 1102), eines maximalen Lenkradwinkels (A_{MAX}) im Zusammenhang mit dem Drehen des Lenkrads (202), nachdem der Lenkradwinkel (A1, A2) den ersten Schwellenwinkel (Θ1, -Θ1) überschritten hat; und
als Reaktion darauf, dass der Verarbeitungsschaltkreis (214, 1102) erkennt, dass der Lenkradwinkel (A1, A2) unter den zweiten Schwellenwinkel (Θ2, -Θ2) gefallen ist:
Einstellen einer Stabilitätszeit (ts) durch den Verarbeitungsschaltkreis (214, 1102) basierend auf dem bestimmten maximalen Lenkradwinkel (A_{MAX});
Bestimmen durch den Verarbeitungsschaltkreis (214, 1102), ob der Lenkradwinkel (A1, A2) für die eingestellte Stabilitätszeit (ts) innerhalb eines Fensters für einen neutralen Lenkwinkel (400W, 402W) bleibt; und
Zurückstellen des Blinksignals (104A, 108A, 104B, 108B) durch den Verarbeitungsschaltkreis (214, 1102) als Reaktion auf das Bestimmen, dass der Lenkradwinkel (A1, A2) für die eingestellte Stabilitätszeit (ts) innerhalb des Fensters für den neutralen Lenkwinkel (400W, 402W) bleibt.

13. Verfahren nach Anspruch 12, das ferner als Reaktion auf die Aktivierung des Blinksignals im Fahrzeug Folgendes umfasst:
Bestimmen einer Geschwindigkeit des Fahrzeugs; und
Einstellen des ersten Schwellenwinkels relativ zur Nullstellung der Lenkung des Lenkrads basierend auf der Geschwindigkeit des Fahrzeugs.

14. Computerprogrammprodukt (1114), das Programmcode (1120) zum Durchführen des Verfahrens nach Anspruch 12 umfasst, wenn dieser durch den Verarbeitungsschaltkreis ausgeführt wird.

15. Nichtflüchtiges, computerlesbares Speichermedium (1114), das Anweisungen (218) umfasst, die, wenn sie durch den Verarbeitungsschaltkreis ausgeführt werden, den Verarbeitungsschaltkreis dazu veranlassen, das Verfahren nach Anspruch 12 durchzuführen.

## Revendications

1. Système d'annulation automatique de changement de direction (208) comprenant un circuit de traitement (214, 1102) configuré pour, en réponse à l'activation d'un changement de direction (104A, 108A, 104B, 108B) dans un véhicule (100) :
détecter un angle de braquage du volant (A1, A2) lié au fait que la rotation d'un volant (202) du véhicule (100) dépasse un premier angle seuil (θ1, -θ1) à partir d'une position de changement de direction neutre (400, 402) indiquant un changement de direction ; et
en réponse à la détection du dépassement du premier angle seuil (θ1, -θ1) par le volant (202) :
détecter que l'angle de braquage du volant (A1, A2) est tombé en dessous d'un second angle seuil (θ2, -θ2) inférieur au premier angle seuil (θ1, -θ2) et vers la position neutre de changement de direction (400, 402) ;
déterminer un angle de braquage du volant maximal (A_{MAX}) lié au braquage du volant (202) après que l'angle de braquage du volant (A1, A2) a dépassé le premier angle seuil (θ1, -θ1) ; et,
en réponse à la détection d'une chute de l'angle de braquage du volant (A1, A2) en dessous du second angle seuil (θ2, -θ2) :
fixer un temps de stabilité (ts) en fonction de l'angle de braquage du volant maximal déterminé (Aₘₐₓ) ;
déterminer si l'angle de braquage du volant (A1, A2) reste dans une fenêtre d'angle neutre de changement de direction (400W, 402W) pendant le temps de stabilité fixé (ts) ; et,
en réponse à la détermination que l'angle de braquage du volant (Al, A2) reste dans la fenêtre d'angle neutre de changement de direction (400W, 402W) pendant le temps de stabilité fixé (ts), annuler le signal de changement de direction (104A, 108A, 104B, 108B).

2. Système d'annulation automatique de changement de direction selon la revendication 1, dans lequel le circuit de traitement est en outre configuré pour, en réponse à la détermination que l'angle de braquage du volant de direction de ne reste pas dans la fenêtre d'angle neutre de changement de direction pendant le temps de stabilité fixé, ne pas annuler le changement de direction.

3. Système d'annulation automatique de changement de direction selon l'une quelconque des revendications 1 et 2, dans lequel le circuit de traitement est configuré pour fixer le temps de stabilité de manière inverse à l'angle de braquage du volant maximal déterminé.

4. Système d'annulation automatique de changement de direction selon l'une quelconque des revendications 1 à 3, dans lequel le circuit de traitement est en outre configuré pour, en réponse à l'activation du changement de direction dans le véhicule :
déterminer la vitesse du véhicule ; et
fixer le premier angle seuil par rapport à la position neutre de changement de direction en fonction de la vitesse du véhicule.

5. Système d'annulation automatique de changement de direction selon la revendication 4, dans lequel le circuit de traitement est configuré pour fixer le premier angle seuil par rapport à la position neutre de changement de direction du volant de manière inverse à la vitesse du véhicule.

6. Système d'annulation automatique de changement de direction selon l'une quelconque des revendications 4 à 5, dans lequel le circuit de traitement est configuré pour :
détecter que l'angle de braquage du volant dépasse le premier angle seuil dans la direction du changement de direction ; et
en réponse à la détection d'un angle de braquage du volant dépassant le premier angle seuil dans la direction du changement de direction :
détecter que l'angle de braquage du volant est tombé en dessous du second angle seuil inférieur au premier angle seuil vers la position neutre de changement de direction ; et
en réponse à la détection que l'angle de braquage du volant est tombé en dessous du second angle seuil :
déterminer l'angle de braquage du volant maximal après que l'angle de braquage du volant a dépassé le premier angle seuil ;
fixer un temps de stabilité en fonction de l'angle maximal déterminé du volant ;
déterminer si l'angle de braquage du volant reste dans la fenêtre d'angle de changement de direction neutre pendant le temps de stabilité fixé ; et
en réponse à la détermination que l'angle de braquage du volant reste dans la fenêtre d'angle de changement de direction neutre pendant le temps de stabilité fixé, annuler le changement de direction.

7. Système d'annulation automatique de changement de direction selon l'une quelconque des revendications 1 à 6, dans lequel la fenêtre d'angle neutre de changement de direction est comprise entre -1 radian et 1 radian.

8. Système d'annulation automatique de changement de direction selon l'une quelconque des revendications 1 à 7, dans lequel, en réponse à l'activation du changement de direction, le circuit de traitement est en outre configuré pour :
détecter un changement de direction sur route par le véhicule alors que l'angle de braquage du volant se trouve dans la position de changement de direction au point mort ; et
en réponse à la détection d'un changement de direction sur route, annuler le changement de direction.

9. Système d'annulation automatique de changement de direction selon la revendication 8, dans lequel le circuit de traitement est configuré pour détecter le changement de direction sur route en étant configuré pour :
recevoir au moins une image d'un système d'imagerie (230) ; et
déterminer si le changement de direction s'est produit en fonction de l'au moins une image reçue.

10. Système d'annulation automatique de changement de direction selon la revendication 8, dans lequel le circuit de traitement est configuré pour détecter le changement de direction sur route en étant configuré pour :
recevoir des données de changement de direction (232) du véhicule générées par un système de positionnement global, GPS (230) ; et
déterminer si le changement de direction a eu lieu en fonction des données de changement de direction reçues.

11. Véhicule comprenant le système d'annulation automatique de changement de direction selon l'une quelconque des revendications 1 à 10.

12. Procédé d'annulation automatique d'un changement de direction (104A, 108A, 104B, 108B) dans un véhicule (100), comprenant :
la détection, par un circuit de traitement (214, 1102), de l'activation d'un signal de changement de direction (104A, 108A, 104B, 108B) dans le véhicule (100) ; et,
en réponse à la détection de l'activation du changement de direction (104A, 108A, 104B, 108B) :
la détection, par le circuit de traitement (214, 1102), d'un angle de braquage du volant (Al, A2) lié au fait la rotation d'un volant (202) du véhicule (100) dépasse un premier angle seuil (θ1, -θ1) à partir d'une position de changement de direction neutre (400, 402) indiquant un changement de direction ; et,
en réponse à la détection par le circuit de traitement (214, 1102) que l'angle de braquage du volant (A1, A2) dépasse le premier angle seuil (θ1, -θ1) :
la détection, par le circuit de traitement (214, 1102), que l'angle de braquage du volant (A1, A2) est tombé en dessous d'un second angle seuil (θ2, -θ2) inférieur au premier angle seuil (θ1, -θ1) et vers la position neutre de changement de direction (400, 402) ;
la détermination, par le circuit de traitement (214, 1102), d'un angle de braquage du volant maximal (A_{MAX}) lié à la rotation du volant (202) après que l'angle de braquage du volant (A1, A2) a dépassé le premier angle seuil (θ1, -θ1) ; et,
en réponse à la détection par le circuit de traitement (214, 1102) que l'angle de braquage du volant (A1, A2) est tombé en dessous du second angle seuil (θ2, -θ2) :
la fixation, par le circuit de traitement (214, 1102), d'un temps de stabilité (ts) basé sur l'angle de braquage du volant maximal déterminé (A_{MAX)} ;
la détermination, par le circuit de traitement (214, 1102), si l'angle de braquage du volant (A1, A2) reste dans une fenêtre d'angle neutre de changement de direction (400W, 402W) pendant le temps de stabilité fixé (ts) ; et
l'annulation, par le circuit de traitement (214, 1102), du signal de changement de direction (104A, 108A, 104B, 108B) en réponse à la détermination que l'angle de braquage du volant (Al, A2) reste dans la fenêtre d'angle neutre de changement de direction (400W, 402W) pendant le temps de stabilité fixé (ts).

13. Procédé selon la revendication 12, comprenant en outre, en réponse à l'activation du changement de direction dans le véhicule :
La détermination de la vitesse du véhicule ; et
la fixation du premier angle seuil par rapport à la position neutre de changement de direction en fonction de la vitesse du véhicule.

14. Produit de programme informatique (1114) comprenant un code de programme (1120) pour exécuter, lorsqu'il est exécuté par le circuit de traitement, le procédé selon la revendication 12.

15. Support de stockage non transitoire lisible par ordinateur (1114) comprenant des instructions (218) qui, lorsqu'elles sont exécutées par le circuit de traitement, amènent le circuit de traitement à exécuter le procédé selon la revendication 12.
